# EUROPEAN PATENT APPLICATION

(11) **EP 4 336 779 A1**
(43) Date of publication of application: **13.03.2024**
(21) Application number: 22815272.4
(22) Date of filing: 31.05.2022
(51) Int. Cl.: H04L 9/40, H04N 19/00

(54) **3D MAP COMPRESSION METHOD AND APPARATUS, AND 3D MAP DECOMPRESSION METHOD AND APPARATUS**

(30) Priority: 04.06.2021 CN 202110627636; 21.07.2021 CN 202110823842
(71) Applicant: Huawei Technologies Co., Ltd., Shenzhen, Guangdong 518129 (CN)
(72) Inventor: CAO, Xiaoran, Shenzhen, Guangdong 518129 (CN); WANG, Pei, Shenzhen, Guangdong 518129 (CN); CAI, Kangying, Shenzhen, Guangdong 518129 (CN); TU, Chenxi, Shenzhen, Guangdong 518129 (CN)
(74) Representative: Grünecker Patent- und Rechtsanwälte PartG mbB
(86) International application number: PCT/CN2022/096261
(87) International publication number: WO 2022/253228

(57) **Abstract**

Embodiments of this application relate to 3D map compression technologies and disclose a 3D map compression method and apparatus, and a 3D map decompression method and apparatus. The compression method includes: performing compaction processing on a to-be-encoded descriptor to obtain a first compact representation of the to-be-encoded descriptor, where the to-be-encoded descriptor corresponds to at least one 3D map point on a 3D map; obtaining a compact representation of at least one reference descriptor corresponding to the to-be-encoded descriptor; obtaining a second compact representation of the to-be-encoded descriptor based on the first compact representation of the to-be-encoded descriptor and the compact representation of the at least one reference descriptor; and encapsulating the second compact representation to obtain a bitstream of the 3D map. According to embodiments of this application, 3D map transmission overheads or 3D map storage overheads can be reduced.

## Description

This application claims priorities to Chinese Patent Application No. 202110627636.9, filed with the China National Intellectual Property Administration on June 4, 2021, and entitled "3D MAP COMPRESSION METHOD AND APPARATUS, AND 3D MAP DECOMPRESSION METHOD AND APPARATUS", and to Chinese Patent Application No. 202110823842.7, filed with the China National Intellectual Property Administration on July 21, 2021, and entitled "3D MAP COMPRESSION METHOD AND APPARATUS, AND 3D MAP DECOMPRESSION METHOD AND APPARATUS", both of which are incorporated herein by reference in their entireties.

### TECHNICAL FIELD

This application relates to 3D map technologies, and in particular, to a 3D map compression method and apparatus, and a 3D map decompression method and apparatus.

### BACKGROUND

Virtual reality (virtual reality, VR), augmented reality (augmented reality, AR), and mixed reality (mixed reality, MR) are multimedia virtual scene technologies emerging in recent years. These technologies can create virtual reality and overlay the virtual reality with the real world to create a new visual environment and interactive experience. In such an application, an electronic device needs to determine pose information of the electronic device in a current environment to accurately implement fusion between a virtual object and a real scene.

In addition, in an application of autonomous driving, autonomous navigation, automatic inspection by an uncrewed aerial vehicle, an industrial robot, or the like, a carrier such as a vehicle, an uncrewed aerial vehicle, or a robot needs to determine a pose of the carrier in a current environment by determining a pose of an electronic device carried on the carrier, to perform accurate path planning, navigation, detection, and operations.

In the foregoing application, a typical solution to the problem that the pose of the electronic device in the current environment needs to be determined is as follows: The electronic device receives, from a server or another device, a three-dimensional (3-dimension, 3D) map of the environment in which the electronic device is located, collects visual information in the environment by using a local sensor, and determines the current pose of the electronic device with reference to the collected visual information and a downloaded 3D map.

However, an original 3D map usually includes a large data volume, and a large amount of bandwidth and a large amount of time need to be consumed for transmitting the map. This severely limits application performance and affects user experience.

### SUMMARY

This application provides a 3D map compression method and apparatus, and a 3D map decompression method and apparatus, to reduce 3D map transmission overheads or 3D map storage overheads.

According to a first aspect, an embodiment of this application provides a 3D map compression method. The method may include: performing compaction processing on a to-be-encoded descriptor to obtain a first compact representation of the to-be-encoded descriptor, where the to-be-encoded descriptor corresponds to at least one 3D map point on a 3D map; obtaining a compact representation of at least one reference descriptor corresponding to the to-be-encoded descriptor, where the at least one reference descriptor corresponds to at least one encoded (or compressed) 3D map point on the 3D map; obtaining a second compact representation of the to-be-encoded descriptor based on the first compact representation of the to-be-encoded descriptor and the compact representation of the at least one reference descriptor; and encapsulating the second compact representation to obtain a bitstream of the 3D map.

For example, the to-be-encoded descriptor may be a zone descriptor or a 3D map point descriptor on the 3D map. The to-be-encoded descriptor may also be referred to as a current descriptor.

The at least one reference descriptor corresponds to the at least one encoded 3D map point on the 3D map. In other words, the at least one reference descriptor may be at least one encoded 3D map point descriptor of the 3D map, or may be at least one encoded zone descriptor of the 3D map.

One to-be-encoded descriptor may have one reference descriptor or a plurality of reference descriptors. When the to-be-encoded descriptor is a zone descriptor, the reference descriptor corresponding to the to-be-encoded descriptor may be a reference zone descriptor. When the to-be-encoded descriptor is a 3D map point descriptor, the reference descriptor corresponding to the to-be-encoded descriptor may be a reference 3D map point descriptor.

In a possible design, the method may further include: receiving 3D map request information sent by an electronic device, and sending, to the electronic device in response to the 3D map request information, the bitstream of the 3D map corresponding to the 3D map request information; or sending the bitstream of the 3D map to a server.

In a possible design, data distribution of the first compact representation is different from data distribution of the second compact representation.

In this embodiment of this application, data distribution of the compact representation (for example, the first compact representation or the second compact representation) is distribution of binary numbers (0, 1) in the compact representation. In this embodiment of this application, data distribution of the compact representation is changed, to reduce a data volume of the bitstream of the 3D map that is subsequently obtained through encapsulation, for example, reduce the data volume of the 3D map from a terabyte (Terabyte, TB) level to a gigabyte (Gigabyte, GB) level, thereby reducing resource overheads required for transmitting the bitstream of the 3D map. In comparison with the data distribution of the first compact representation, in the second compact representation in this embodiment of this application, 0 is more densely distributed, or 1 is more densely distributed.

In a possible design, the first compact representation of the to-be-encoded descriptor includes at least one first compact representation substring of the to-be-encoded descriptor, and the second compact representation of the to-be-encoded descriptor includes at least one second compact representation substring of the to-be-encoded descriptor, where the at least one first compact representation substring is different from the at least one second compact representation substring.

For example, each of the at least one first compact representation substring is different from a corresponding second compact representation substring. For example, the first compact representation includes three first compact representation substrings (A1, A2, and A3), and the second compact representation includes three second compact representation substrings (B1, B2, and B3), where A1 is different from B1, A2 is different from B2, and A3 is different from B3.

In a possible design, the at least one second compact representation substring is partially or all less than or equal to the corresponding first compact representation substring; or the at least one second compact representation substring is partially or all greater than or equal to the corresponding first compact representation substring.

In this implementation, through mapping by using a first table, mapping by using a second table, mapping by using an exclusive OR value, or mapping by using a difference, the at least one second compact representation substring is partially or all less than or equal to the corresponding first compact representation substring; and the first compact representation substring is mapped toward a first direction, where the first direction may be a direction with a small value, to increase density of 0 distributed in the second compact representation, and reduce the data volume of the bitstream of the 3D map that is subsequently obtained through encapsulation. Alternatively, through mapping by using a first table, mapping by using a second table, mapping by using an exclusive OR value, or mapping by using a difference, the at least one second compact representation substring is partially or all greater than or equal to the corresponding first compact representation substring; and the first compact representation substring is mapped toward a second direction, where the second direction may be a direction with a large value, to increase density of 1 distributed in the second compact representation, and reduce the data volume of the bitstream of the 3D map that is subsequently obtained through encapsulation.

In a possible design, the obtaining a second compact representation of the to-be-encoded descriptor based on the first compact representation of the to-be-encoded descriptor and the compact representation of the at least one reference descriptor may include: obtaining the second compact representation of the to-be-encoded descriptor by looking up a first table based on the first compact representation of the to-be-encoded descriptor and the compact representation of the at least one reference descriptor.

In a possible design, the first table includes at least one third compact representation substring corresponding to at least one encoded compact representation substring and at least one second reference compact representation substring, where the first compact representation of the to-be-encoded descriptor includes the at least one first compact representation substring of the to-be-encoded descriptor, the at least one encoded compact representation substring includes the at least one first compact representation substring, and the at least one second reference compact representation substring includes at least one first reference compact representation substring of the at least one reference descriptor; and the obtaining the second compact representation of the to-be-encoded descriptor by looking up a first table based on the first compact representation of the to-be-encoded descriptor and the compact representation of the at least one reference descriptor may include: obtaining, from the first table based on the at least one first compact representation substring of the to-be-encoded descriptor and the at least one first reference compact representation substring of the reference descriptor corresponding to the to-be-encoded descriptor, the at least one third compact representation substring corresponding to the at least one first compact representation substring and the at least one first reference compact representation substring; and obtaining the second compact representation of the to-be-encoded descriptor based on the at least one third compact representation substring corresponding to the at least one first compact representation substring and the at least one first reference compact representation substring.

In a possible design, the first table is a multidimensional array, and each element in the multidimensional array corresponds to the at least one encoded compact representation substring or the at least one second reference compact representation substring.

In a possible design, the obtaining a second compact representation of the to-be-encoded descriptor based on the first compact representation of the to-be-encoded descriptor and the compact representation of the at least one reference descriptor may include: obtaining the second compact representation of the to-be-encoded descriptor by looking up a second table based on the first compact representation of the to-be-encoded descriptor, where the second table is established based on the compact representation of the at least one reference descriptor.

In a possible design, the first compact representation of the to-be-encoded descriptor includes the at least one first compact representation substring of the to-be-encoded descriptor, the compact representation of the at least one reference descriptor includes at least one first reference compact representation substring, and the second table includes the at least one first reference compact representation substring and at least one fourth compact representation substring corresponding to the at least one first compact representation substring; and the obtaining the second compact representation of the to-be-encoded descriptor by looking up a second table based on the first compact representation of the to-be-encoded descriptor includes: obtaining, from the second table based on the at least one first compact representation substring of the to-be-encoded descriptor, the at least one fourth compact representation substring corresponding to the at least one first compact representation substring, where the second table is established based on the at least one first reference compact representation substring; and obtaining the second compact representation of the to-be-encoded descriptor based on the at least one fourth compact representation substring corresponding to the at least one first compact representation substring.

In a possible design, the second table is an array with at least one dimension, and each element in the array with at least one dimension corresponds to the at least one first compact representation substring.

In a possible design, the obtaining a second compact representation of the to-be-encoded descriptor based on the first compact representation of the to-be-encoded descriptor and the compact representation of the at least one reference descriptor may include: using an exclusive OR value or a difference of the compact representation of the at least one reference descriptor and the first compact representation of the to-be-encoded descriptor as the second compact representation of the to-be-encoded descriptor.

In a possible design, the at least one reference descriptor corresponding to the to-be-encoded descriptor includes: at least one compressed (or encoded) descriptor before the to-be-encoded descriptor; at least one preset descriptor; or at least one descriptor determined by using a neural network model or through clustering.

In a possible design, the compaction processing includes quantization processing or binarization processing, and the quantization processing or the binarization processing is used to reduce a quantity of bits of the to-be-encoded descriptor.

According to a second aspect, an embodiment of this application provides a 3D map decompression method. The method may include: decapsulating a bitstream of a 3D map to obtain a second compact representation of a to-be-decoded descriptor, where the to-be-decoded descriptor corresponds to at least one 3D map point on the 3D map; obtaining a compact representation of at least one reference descriptor corresponding to the to-be-decoded descriptor, where the at least one reference descriptor corresponds to at least one decoded (or decompressed) 3D map point on the 3D map; obtaining a first compact representation of the to-be-decoded descriptor based on the second compact representation of the to-be-decoded descriptor and the compact representation of the at least one reference descriptor corresponding to the to-be-decoded descriptor; and obtaining reconstructed data of the at least one 3D map point based on the first compact representation of the to-be-decoded descriptor.

In a possible design, the method may further include: sending 3D map request information, and receiving the bitstream of the 3D map corresponding to the 3D map request information; or receiving the bitstream of the 3D map sent by an electronic device.

In a possible design, data distribution of the first compact representation is different from data distribution of the second compact representation.

In a possible design, the first compact representation of the to-be-decoded descriptor includes at least one first compact representation substring of the to-be-decoded descriptor, and the second compact representation of the to-be-decoded descriptor includes at least one second compact representation substring of the to-be-decoded descriptor, where the at least one first compact representation substring is different from the at least one second compact representation substring.

In a possible design, the at least one second compact representation substring is partially or all less than or equal to the corresponding first compact representation substring; or the at least one second compact representation substring is partially or all greater than or equal to the corresponding first compact representation substring.

In a possible design, the obtaining a first compact representation of the to-be-decoded descriptor based on the second compact representation of the to-be-decoded descriptor and the compact representation of the at least one reference descriptor corresponding to the to-be-decoded descriptor may include: obtaining the first compact representation of the to-be-decoded descriptor by looking up a first table based on the second compact representation of the to-be-decoded descriptor and the compact representation of the at least one reference descriptor corresponding to the to-be-decoded descriptor.

In a possible design, the obtaining a first compact representation of the to-be-decoded descriptor based on the second compact representation of the to-be-decoded descriptor and the compact representation of the at least one reference descriptor corresponding to the to-be-decoded descriptor includes: obtaining the first compact representation of the to-be-decoded descriptor by looking up a second table based on the second compact representation of the to-be-decoded descriptor, where the second table is established based on the compact representation of the at least one reference descriptor corresponding to the to-be-decoded descriptor.

In a possible design, the obtaining a first compact representation of the to-be-decoded descriptor based on the second compact representation of the to-be-decoded descriptor and the compact representation of the at least one reference descriptor corresponding to the to-be-decoded descriptor includes: using an exclusive OR value or a sum of the compact representation of the at least one reference descriptor and the second compact representation of the to-be-decoded descriptor as the first compact representation of the to-be-decoded descriptor.

According to a third aspect, an embodiment of this application provides a 3D map compression apparatus. The apparatus may be a chip or a system-on-a-chip in an electronic device or a server, or may be a functional module that is in an electronic device or a server and that is configured to implement the method according to any one of the first aspect or the possible implementations of the first aspect. For example, the apparatus may include a compaction processing module, a mapping module, and an encapsulation module.

The compaction processing module is configured to perform compaction processing on a to-be-encoded descriptor to obtain a first compact representation of the to-be-encoded descriptor, where the to-be-encoded descriptor corresponds to at least one 3D map point on a 3D map; the mapping module is configured to obtain a compact representation of at least one reference descriptor corresponding to the to-be-encoded descriptor, where the at least one reference descriptor corresponds to at least one encoded (or compressed) 3D map point on the 3D map; the mapping module is further configured to obtain a second compact representation of the to-be-encoded descriptor based on the first compact representation of the to-be-encoded descriptor and the compact representation of the at least one reference descriptor; and the encapsulation module is configured to encapsulate the second compact representation to obtain a bitstream of the 3D map.

In a possible design, the apparatus may further include a transmission module, where the transmission module is configured to receive 3D map request information sent by an electronic device, and send, to the electronic device in response to the 3D map request information, the bitstream of the 3D map corresponding to the 3D map request information; or the transmission module is configured to send the bitstream of the 3D map to a server.

In a possible design, data distribution of the first compact representation is different from data distribution of the second compact representation.

In a possible design, the first compact representation of the to-be-encoded descriptor includes at least one first compact representation substring of the to-be-encoded descriptor, and the second compact representation of the to-be-encoded descriptor includes at least one second compact representation substring of the to-be-encoded descriptor, where the at least one first compact representation substring is different from the at least one second compact representation substring.

In a possible design, the at least one second compact representation substring is partially or all less than or equal to the corresponding first compact representation substring; or the at least one second compact representation substring is partially or all greater than or equal to the corresponding first compact representation substring.

In a possible design, the mapping module is configured to obtain the second compact representation of the to-be-encoded descriptor by looking up a first table based on the first compact representation of the to-be-encoded descriptor and the compact representation of the at least one reference descriptor.

In a possible design, the first table may include at least one third compact representation substring corresponding to at least one encoded compact representation substring and at least one second reference compact representation substring, where the first compact representation of the to-be-encoded descriptor includes the at least one first compact representation substring of the to-be-encoded descriptor, the at least one encoded compact representation substring includes the at least one first compact representation substring, and the at least one second reference compact representation substring includes at least one first reference compact representation substring of the at least one reference descriptor; and the mapping module is configured to: obtain, from the first table based on the at least one first compact representation substring of the to-be-encoded descriptor and the at least one first reference compact representation substring of the reference descriptor corresponding to the to-be-encoded descriptor, the at least one third compact representation substring corresponding to the at least one first compact representation substring and the at least one first reference compact representation substring; and obtain the second compact representation of the to-be-encoded descriptor based on the at least one third compact representation substring corresponding to the at least one first compact representation substring and the at least one first reference compact representation substring.

In a possible design, the first table is a multidimensional array, and each element in the multidimensional array corresponds to the at least one encoded compact representation substring or the at least one second reference compact representation substring.

In a possible design, the mapping module is configured to obtain the second compact representation of the to-be-encoded descriptor by looking up a second table based on the first compact representation of the to-be-encoded descriptor, where the second table is established based on the compact representation of the at least one reference descriptor.

In a possible design, the first compact representation of the to-be-encoded descriptor includes the at least one first compact representation substring of the to-be-encoded descriptor, the compact representation of the at least one reference descriptor includes at least one first reference compact representation substring, and the second table includes the at least one first reference compact representation substring and at least one fourth compact representation substring corresponding to the at least one first compact representation substring; and the mapping module is configured to: obtain, from the second table based on the at least one first compact representation substring of the to-be-encoded descriptor, the at least one fourth compact representation substring corresponding to the at least one first compact representation substring, where the second table is established based on the at least one first reference compact representation substring; and obtain the second compact representation of the to-be-encoded descriptor based on the at least one fourth compact representation substring corresponding to the at least one first compact representation substring.

In a possible design, the second table is an array with at least one dimension, and each element in the array with at least one dimension corresponds to the at least one first compact representation substring.

In a possible design, the mapping module is configured to use an exclusive OR value or a difference of the compact representation of the at least one reference descriptor and the first compact representation of the to-be-encoded descriptor as the second compact representation of the to-be-encoded descriptor.

In a possible design, the to-be-encoded descriptor includes a zone descriptor or a 3D map point descriptor.

In a possible design, the at least one reference descriptor corresponding to the to-be-encoded descriptor includes: at least one compressed descriptor before the to-be-encoded descriptor; at least one preset descriptor; or at least one descriptor determined by using a neural network model or through clustering.

In a possible design, the compaction processing includes quantization processing or binarization processing, and the quantization processing or the binarization processing is used to reduce a quantity of bits of the to-be-encoded descriptor.

According to a fourth aspect, an embodiment of this application provides a 3D map decompression apparatus. The apparatus may be a chip or a system-on-a-chip in an electronic device or a server, or may be a functional module that is in an electronic device or a server and that is configured to implement the method according to any one of the second aspect or the possible implementations of the second aspect. For example, the apparatus may include a decapsulation module, a demapping module, and a reconstruction module.

The decapsulation module is configured to decapsulate a bitstream of a 3D map to obtain a second compact representation of a to-be-decoded descriptor, where the to-be-decoded descriptor corresponds to at least one 3D map point on the 3D map; the demapping module is configured to obtain a compact representation of at least one reference descriptor corresponding to the to-be-decoded descriptor, where the at least one reference descriptor corresponds to at least one decoded 3D map point on the 3D map; the demapping module is further configured to obtain a first compact representation of the to-be-decoded descriptor based on the second compact representation of the to-be-decoded descriptor and the compact representation of the at least one reference descriptor corresponding to the to-be-decoded descriptor; and the reconstruction module is configured to obtain reconstructed data of the at least one 3D map point based on the first compact representation of the to-be-decoded descriptor.

In a possible design, the apparatus may further include a transmission module, configured to send 3D map request information, and receive the bitstream of the 3D map corresponding to the 3D map request information; or configured to receive the bitstream of the 3D map sent by an electronic device.

In a possible design, data distribution of the first compact representation is different from data distribution of the second compact representation.

In a possible design, the first compact representation of the to-be-decoded descriptor includes at least one first compact representation substring of the to-be-decoded descriptor, and the second compact representation of the to-be-decoded descriptor includes at least one second compact representation substring of the to-be-decoded descriptor, where the at least one first compact representation substring is different from the at least one second compact representation substring.

In a possible design, the at least one second compact representation substring is partially or all less than or equal to the corresponding first compact representation substring; or the at least one second compact representation substring is partially or all greater than or equal to the corresponding first compact representation substring.

In a possible design, the demapping module is configured to obtain the first compact representation of the to-be-decoded descriptor by looking up a first table based on the second compact representation of the to-be-decoded descriptor and the compact representation of the at least one reference descriptor corresponding to the to-be-decoded descriptor.

In a possible design, the demapping module is configured to obtain the first compact representation of the to-be-decoded descriptor by looking up a second table based on the second compact representation of the to-be-decoded descriptor, where the second table is established based on the compact representation of the at least one reference descriptor corresponding to the to-be-decoded descriptor.

In a possible design, the demapping module is configured to use an exclusive OR value or a sum of the compact representation of the at least one reference descriptor and the second compact representation of the to-be-decoded descriptor as the first compact representation of the to-be-decoded descriptor.

According to a fifth aspect, an embodiment of this application provides a 3D map compression apparatus, including: one or more processors; and a memory, configured to store one or more programs, where when the one or more programs are executed by the one or more processors, the one or more processors are enabled to implement the method according to any one of the first aspect or the possible designs of the first aspect.

According to a sixth aspect, an embodiment of this application provides a 3D map decompression apparatus, including: one or more processors; and a memory, configured to store one or more programs, where when the one or more programs are executed by the one or more processors, the one or more processors are enabled to implement the method according to any one of the second aspect or the possible designs of the second aspect.

According to a seventh aspect, an embodiment of this application provides a computer-readable storage medium, including a computer program, where when the computer program is executed on a computer, the computer is enabled to perform the method according to any one of the first aspect or the possible designs of the first aspect, or perform the method according to any one of the second aspect or the possible designs of the second aspect.

According to an eighth aspect, this application provides a computer program or a computer program product, where when the computer program or the computer program product is executed on a computer, the computer is enabled to perform the method according to any one of the first aspect and the second aspect and the possible implementations of the first aspect and the second aspect.

According to a ninth aspect, this application provides a non-transitory storage medium, including the bitstream encoded by using the method according to any one of the first aspect.

According to a tenth aspect, an embodiment of this application provides a 3D map compression method. The method may include: performing clustering processing on a to-be-encoded descriptor to obtain information for at least one first center of the to-be-encoded descriptor, where the to-be-encoded descriptor corresponds to at least one 3D map point on a 3D map, and the information for the at least one first center represents a center obtained after the clustering processing is performed on at least one subfeature of the to-be-encoded descriptor; obtaining information for at least one first reference center of a reference descriptor corresponding to the to-be-encoded descriptor, where the reference descriptor corresponds to at least one encoded 3D map point on the 3D map, and the information for the at least one first reference center represents a center obtained after clustering processing is performed on at least one subfeature of the reference descriptor; obtaining information for at least one second center of the to-be-encoded descriptor based on the information for the at least one first center of the to-be-encoded descriptor and the information for the at least one first reference center; performing compaction processing on the information for the at least one second center of the to-be-encoded descriptor to obtain a compact representation of the to-be-encoded descriptor; and encapsulating the compact representation to obtain a bitstream of the 3D map.

It can be learned that in this embodiment, clustering processing is first performed, and the first center information is used to represent the original to-be-encoded descriptor, to reduce a data volume of the to-be-encoded descriptor, and then the information for the at least one first center is mapped to the information for the at least one second center, to change data distribution of the center information, thereby further reducing a data volume of the bitstream of the 3D map that is obtained through compaction processing and encapsulation, and reducing resource overheads required for transmitting the bitstream of the 3D map.

For example, the to-be-encoded descriptor may be partitioned into one or more subfeatures, and clustering processing is performed on each subfeature to obtain one or more pieces of first center information. The one or more pieces of first center information may be numbers of one or more clustering centers.

For example, the to-be-encoded descriptor may be a zone descriptor or a 3D map point descriptor on the 3D map. The to-be-encoded descriptor may also be referred to as a current descriptor.

The reference descriptor corresponds to the at least one encoded 3D map point on the 3D map. In other words, the reference descriptor may be an encoded 3D map point descriptor of the 3D map, or may be an encoded zone descriptor of the 3D map.

When the to-be-encoded descriptor is a zone descriptor, the reference descriptor corresponding to the to-be-encoded descriptor may be a reference zone descriptor. When the to-be-encoded descriptor is a 3D map point descriptor, the reference descriptor corresponding to the to-be-encoded descriptor may be a reference 3D map point descriptor.

In a possible design, the method may further include: receiving 3D map request information sent by an electronic device, and sending, to the electronic device in response to the 3D map request information, the bitstream of the 3D map corresponding to the 3D map request information. An entity (which may be an electronic device or may be a server (for example, a cloud server)) for performing the compression method in the tenth aspect may receive 3D map request information sent by another electronic device, and send, to the electronic device, the bitstream of the 3D map corresponding to the 3D map request information.

In a possible design, the method may further include: sending the bitstream of the 3D map to a server. An entity (which may be a first electronic device) for performing the compression method in the tenth aspect may send the bitstream of the 3D map to the server, and the server may send the bitstream of the 3D map to a second electronic device.

In a possible design, the obtaining information for at least one second center of the to-be-encoded descriptor based on the information for the at least one first center of the to-be-encoded descriptor and the information for the at least one first reference center may include: obtaining the information for the at least one second center of the to-be-encoded descriptor by looking up a first table based on the information for the at least one first center of the to-be-encoded descriptor and the information for the at least one first reference center.

In a possible design, the first table includes information for at least one third center corresponding to information for at least one coding center and information for at least one second reference center, where the information for at least the coding center includes the information for the at least one first center of the to-be-encoded descriptor, and the information for the at least one second reference center includes the information for the at least one first reference center; and the obtaining the information for the at least one second center of the to-be-encoded descriptor by looking up a first table based on the information for the at least one first center of the to-be-encoded descriptor and the information for the at least one first reference center includes: obtaining, from the first table based on the information for the at least one first center of the to-be-encoded descriptor and the information for the at least one first reference center, the information for the at least one third center corresponding to the information for the at least one first center and the information for the at least one first reference center; and using the information for the at least one third center as the information for the at least one second center of the to-be-encoded descriptor.

In a possible design, the first table is a multidimensional array, and each element in the multidimensional array corresponds to the information for at least the coding center or the information for the at least one second reference center.

In a possible design, the obtaining information for at least one second center of the to-be-encoded descriptor based on the information for the at least one first center of the to-be-encoded descriptor and the information for the at least one first reference center includes: obtaining the information for the at least one second center of the to-be-encoded descriptor by looking up a second table based on the information for the at least one first center of the to-be-encoded descriptor, where the second table is established based on the information for the at least one first reference center.

In a possible design, the second table includes the information for the at least one first reference center and information for at least one fourth center corresponding to the information for the at least one first center of the to-be-encoded descriptor; and the obtaining the information for the at least one second center of the to-be-encoded descriptor by looking up a second table based on the information for the at least one first center of the to-be-encoded descriptor includes: obtaining, from the second table based on the information for the at least one first center of the to-be-encoded descriptor, the information for the at least one fourth center corresponding to the information for the at least one first center; and using the information for the at least one fourth center corresponding to the information for the at least one first center as the information for the at least one second center of the to-be-encoded descriptor.

In a possible design, the second table is an array with at least one dimension, and each element in the array with at least one dimension corresponds to the information for the at least one first center.

In a possible design, the obtaining information for at least one second center of the to-be-encoded descriptor based on the information for the at least one first center of the to-be-encoded descriptor and the information for the at least one first reference center includes: using an exclusive OR value or a difference of the information for the at least one first center of the to-be-encoded descriptor and the information for the at least one first reference center as the information for the at least one second center of the to-be-encoded descriptor.

According to an eleventh aspect, an embodiment of this application provides a 3D map decompression method. The method may include: decapsulating a bitstream of a 3D map to obtain information for at least one second center of a to-be-decoded descriptor, where the to-be-decoded descriptor corresponds to at least one 3D map point on the 3D map; obtaining information for at least one first reference center of a reference descriptor corresponding to the to-be-decoded descriptor, where the reference descriptor corresponds to at least one decoded 3D map point on the 3D map, and the information for the at least one first reference center represents a center obtained after clustering processing is performed on at least one subfeature of the reference descriptor; obtaining information for at least one first center of the to-be-decoded descriptor based on the information for the at least one second center of the to-be-decoded descriptor and the information for the at least one first reference center of the reference descriptor corresponding to the to-be-decoded descriptor; and obtaining reconstructed data of the at least one 3D map point based on the information for the at least one first center of the to-be-decoded descriptor.

In a possible design, the method may further include: sending 3D map request information, and receiving the bitstream of the 3D map corresponding to the 3D map request information; or receiving the bitstream of the 3D map sent by an electronic device.

In a possible design, the obtaining information for at least one first center of the to-be-decoded descriptor based on the information for the at least one second center of the to-be-decoded descriptor and the information for the at least one first reference center of the reference descriptor corresponding to the to-be-decoded descriptor may include: obtaining the information for the at least one first center of the to-be-decoded descriptor by looking up a first table based on the information for the at least one second center of the to-be-decoded descriptor and the information for the at least one first reference center of the reference descriptor corresponding to the to-be-decoded descriptor.

In a possible design, the obtaining information for at least one first center of the to-be-decoded descriptor based on the information for the at least one second center of the to-be-decoded descriptor and the information for the at least one first reference center of the reference descriptor corresponding to the to-be-decoded descriptor includes: obtaining the information for the at least one first center of the to-be-decoded descriptor by looking up a second table based on the information for the at least one second center of the to-be-decoded descriptor, where the second table is established based on the information for the at least one first reference center of the reference descriptor corresponding to the to-be-decoded descriptor.

In a possible design, the obtaining information for at least one first center of the to-be-decoded descriptor based on the information for the at least one second center of the to-be-decoded descriptor and the information for the at least one first reference center of the reference descriptor corresponding to the to-be-decoded descriptor includes: using an exclusive OR value or a sum of the information for the at least one second center of the to-be-decoded descriptor and the information for the at least one first reference center of the reference descriptor corresponding to the to-be-decoded descriptor as the information for the at least one first center of the to-be-decoded descriptor.

According to a twelfth aspect, an embodiment of this application provides a 3D map compression apparatus. The apparatus may be a chip or a system-on-a-chip in an electronic device or a server, or may be a functional module that is in an electronic device or a server and that is configured to implement the method according to any one of the tenth aspect or the possible implementations of the tenth aspect. For example, the apparatus may include a mapping module, a compaction processing module, and an encapsulation module.

The mapping module is configured to perform clustering processing on a to-be-encoded descriptor to obtain information for at least one first center of the to-be-encoded descriptor, where the to-be-encoded descriptor corresponds to at least one 3D map point on a 3D map, and the information for the at least one first center represents a center obtained after the clustering processing is performed on at least one subfeature of the to-be-encoded descriptor;
the mapping module is further configured to: obtain information for at least one first reference center of a reference descriptor corresponding to the to-be-encoded descriptor, where the reference descriptor corresponds to at least one encoded 3D map point on the 3D map, and the information for the at least one first reference center represents a center obtained after clustering processing is performed on at least one subfeature of the reference descriptor; and obtain information for at least one second center of the to-be-encoded descriptor based on the information for the at least one first center of the to-be-encoded descriptor and the information for the at least one first reference center;
the compaction processing module is configured to perform compaction processing on the information for the at least one second center of the to-be-encoded descriptor to obtain a compact representation of the to-be-encoded descriptor; and
the encapsulation module is configured to encapsulate the compact representation to obtain a bitstream of the 3D map.

In a possible design, the apparatus may further include a transmission module, where the transmission module is configured to receive 3D map request information sent by an electronic device, and send, to the electronic device in response to the 3D map request information, the bitstream of the 3D map corresponding to the 3D map request information; or the transmission module is configured to send the bitstream of the 3D map to a server.

In a possible design, the mapping module is specifically configured to obtain the information for the at least one second center of the to-be-encoded descriptor by looking up a first table based on the information for the at least one first center of the to-be-encoded descriptor and the information for the at least one first reference center.

In a possible design, the first table includes information for at least one third center corresponding to information for at least one coding center and information for at least one second reference center, where the information for at least the coding center includes the information for the at least one first center of the to-be-encoded descriptor, and the information for the at least one second reference center includes the information for the at least one first reference center; and the mapping module is specifically configured to: obtain, from the first table based on the information for the at least one first center of the to-be-encoded descriptor and the information for the at least one first reference center, the information for the at least one third center corresponding to the information for the at least one first center and the information for the at least one first reference center; and use the information for the at least one third center as the information for the at least one second center of the to-be-encoded descriptor.

In a possible design, the first table is a multidimensional array, and each element in the multidimensional array corresponds to the information for at least the coding center or the information for the at least one second reference center.

In a possible design, the mapping module is specifically configured to obtain the information for the at least one second center of the to-be-encoded descriptor by looking up a second table based on the information for the at least one first center of the to-be-encoded descriptor, where the second table is established based on the information for the at least one first reference center.

In a possible design, the second table includes the information for the at least one first reference center and information for at least one fourth center corresponding to the information for the at least one first center of the to-be-encoded descriptor; and the mapping module is specifically configured to: obtain, from the second table based on the information for the at least one first center of the to-be-encoded descriptor, the information for the at least one fourth center corresponding to the information for the at least one first center; and use the information for the at least one fourth center corresponding to the information for the at least one first center as the information for the at least one second center of the to-be-encoded descriptor.

In a possible design, the second table is an array with at least one dimension, and each element in the array with at least one dimension corresponds to the information for the at least one first center.

In a possible design, the mapping module is specifically configured to use an exclusive OR value or a difference of the information for the at least one first center of the to-be-encoded descriptor and the information for the at least one first reference center as the information for the at least one second center of the to-be-encoded descriptor.

According to a thirteenth aspect, an embodiment of this application provides a 3D map decompression apparatus. The apparatus may be a chip or a system-on-a-chip in an electronic device or a server, or may be a functional module that is in an electronic device or a server and that is configured to implement the method according to any one of the eleventh aspect or the possible implementations of the eleventh aspect. For example, the apparatus may include a decapsulation module, a demapping module, and a reconstruction module.

The decapsulation module is configured to decapsulate a bitstream of a 3D map to obtain information for at least one second center of a to-be-decoded descriptor, where the to-be-decoded descriptor corresponds to at least one 3D map point on the 3D map;
the demapping module is configured to obtain information for at least one first reference center of a reference descriptor corresponding to the to-be-decoded descriptor, where the reference descriptor corresponds to at least one decoded 3D map point on the 3D map, and the information for the at least one first reference center represents a center obtained after clustering processing is performed on at least one subfeature of the reference descriptor; and obtain information for at least one first center of the to-be-decoded descriptor based on the information for the at least one second center of the to-be-decoded descriptor and the information for the at least one first reference center of the reference descriptor corresponding to the to-be-decoded descriptor; and
the reconstruction module is configured to obtain reconstructed data of the at least one 3D map point based on the information for the at least one first center of the to-be-decoded descriptor.

In a possible design, the apparatus may further include a transmission module, configured to send 3D map request information, and receive the bitstream of the 3D map corresponding to the 3D map request information; or configured to receive the bitstream of the 3D map sent by an electronic device.

In a possible design, the demapping module is specifically configured to obtain the information for the at least one first center of the to-be-decoded descriptor by looking up a first table based on the information for the at least one second center of the to-be-decoded descriptor and the information for the at least one first reference center of the reference descriptor corresponding to the to-be-decoded descriptor.

In a possible design, the demapping module is specifically configured to obtain the information for the at least one first center of the to-be-decoded descriptor by looking up a second table based on the information for the at least one second center of the to-be-decoded descriptor, where the second table is established based on the information for the at least one first reference center of the reference descriptor corresponding to the to-be-decoded descriptor.

In a possible design, the demapping module is specifically configured to use an exclusive OR value or a sum of the information for the at least one second center of the to-be-decoded descriptor and the information for the at least one first reference center of the reference descriptor corresponding to the to-be-decoded descriptor as the information for the at least one first center of the to-be-decoded descriptor.

According to a fourteenth aspect, an embodiment of this application provides a 3D map compression apparatus, including: one or more processors; and a memory, configured to store one or more programs, where when the one or more programs are executed by the one or more processors, the one or more processors are enabled to implement the method according to any one of the tenth aspect or the possible designs of the tenth aspect.

According to a fifteenth aspect, an embodiment of this application provides a 3D map decompression apparatus, including: one or more processors; and a memory, configured to store one or more programs, where when the one or more programs are executed by the one or more processors, the one or more processors are enabled to implement the method according to any one of the eleventh aspect or the possible designs of the eleventh aspect.

According to a sixteenth aspect, an embodiment of this application provides a computer-readable storage medium, including a computer program, where when the computer program is executed on a computer, the computer is enabled to perform the method according to any one of the tenth aspect or the possible designs of the tenth aspect, or perform the method according to any one of the eleventh aspect or the possible designs of the eleventh aspect.

According to a seventeenth aspect, this application provides a computer program or a computer program product, where when the computer program or the computer program product is executed on a computer, the computer is enabled to perform the method according to any one of the tenth aspect and the eleventh aspect and the possible implementations of the tenth aspect and the eleventh aspect.

According to an eighteenth aspect, this application provides a non-transitory storage medium, including the bitstream encoded by using the method according to any one of the tenth aspect.

It should be understood that the technical solutions of the third aspect to the ninth aspect of this application are consistent with the technical solutions of the first aspect and the second aspect of this application, with similar beneficial effects achieved in the aspects and corresponding feasible implementations. Details are not described again. The technical solutions of the twelfth aspect to the eighteenth aspect of this application are consistent with the technical solutions of the tenth aspect and the eleventh aspect of this application, with similar beneficial effects achieved in the aspects and corresponding feasible implementations. Details are not described again.

### BRIEF DESCRIPTION OF DRAWINGS

FIG. 1 is a schematic diagram of an application architecture according to an embodiment of this application;
FIG. 2 is a schematic diagram of a structure of an electronic device 20 according to an embodiment of this application;
FIG. 3 is a schematic diagram of a structure of a server 30 according to an embodiment of this application;
FIG. 4a to FIG. 4f are schematic diagrams of an application scenario according to an embodiment of this application;
FIG. 4g is a schematic diagram of a user interface displayed by an electronic device according to an embodiment of this application;
FIG. 5 is a schematic flowchart of a 3D map compression method according to an embodiment of this application;
FIG. 6 is a schematic diagram of comparison between data distribution of a second compact representation and data distribution of a first compact representation according to an embodiment of this application;
FIG. 7 is a schematic flowchart of a 3D map decompression method according to an embodiment of this application;
FIG. 8 is a schematic flowchart of a 3D map compression method according to an embodiment of this application;
FIG. 9 is a schematic flowchart of a 3D map decompression method according to an embodiment of this application;
FIG. 10 is a schematic flowchart of a 3D map compression method according to an embodiment of this application;
FIG. 11 is a schematic flowchart of a 3D map decompression method according to an embodiment of this application;
FIG. 12 is a schematic flowchart of a 3D map compression method according to an embodiment of this application;
FIG. 13 is a schematic flowchart of a 3D map decompression method according to an embodiment of this application;
FIG. 14 is a schematic diagram of a structure of a 3D map compression apparatus according to an embodiment of this application;
FIG. 15 is a schematic diagram of a structure of a 3D map decompression apparatus according to an embodiment of this application;
FIG. 16 is a schematic block diagram of a decoding apparatus 1600 according to an embodiment of this application;
FIG. 17 is a schematic diagram for partitioning a first compact representation into substrings according to an embodiment of this application;
FIG. 18 is a schematic flowchart of a 3D map compression method according to an embodiment of this application; and
FIG. 19 is a schematic flowchart of a 3D map decompression method according to an embodiment of this application.

### DESCRIPTION OF EMBODIMENTS

The following describes embodiments of this application with reference to the accompanying drawings in embodiments of this application. Terms used in embodiments of this application are only used to explain specific embodiments of this application, but are not intended to limit this application.

In embodiments of the specification, claims, and accompanying drawings of this application, the terms "first", "second", and the like are merely intended for distinguishing and description, and shall not be understood as an indication or implication of relative importance or an indication or implication of an order. In addition, the terms "include", "have", and any variant thereof are intended to cover a non-exclusive inclusion, for example, include a series of steps or units. A method, a system, a product, or a device is not necessarily limited to clearly listed steps or units, but may include other steps or units that are not clearly listed and that are inherent to the process, the method, the product, or the device.

It should be understood that, in this application, "at least one (item)" means one or more, and "plurality" means two or more. The term "and/or" describes an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between associated objects. "At least one of the following items" or a similar expression thereof indicates any combination of the items, including one of the items or any combination of a plurality of the items. For example, at least one of a, b, or c may represent a, b, c, "a and b", "a and c", "b and c", or "a, b, and c", where a, b, and c may be singular or plural.

In embodiments of this application, the term "example", "for example", or the like represents an example, an illustration, or a description. Any embodiment or design scheme described as "example" or "for example" in embodiments of this application should not be construed as being more preferred or advantageous than another embodiment or design scheme. To be precise, the terms such as "example" or "for example" are intended to present a relative concept in a specific manner.

The terms "alan", "the", and "this" of singular forms used in embodiments or the appended claims of this application are also intended to include plural forms, unless otherwise specified in the context clearly. It should also be understood that the term "and/or" used in this specification indicates and includes any or all possible combinations of one or more associated listed items. As used in this specification, singular forms "one", "a", and "the" are also intended to include plural forms, unless otherwise clearly indicated in the context. It is further understood that the terms "comprise", "have", "include", and/or "contain" are used in this specification to specify presence of stated features, integers, steps, operations, elements, and/or components, but do not preclude presence or addition of one or more other features, integers, steps, operations, elements, components, and/or groups thereof.

It should be noted that the terms used in embodiments of this application are merely intended to describe specific embodiments, but not intended to limit this application.

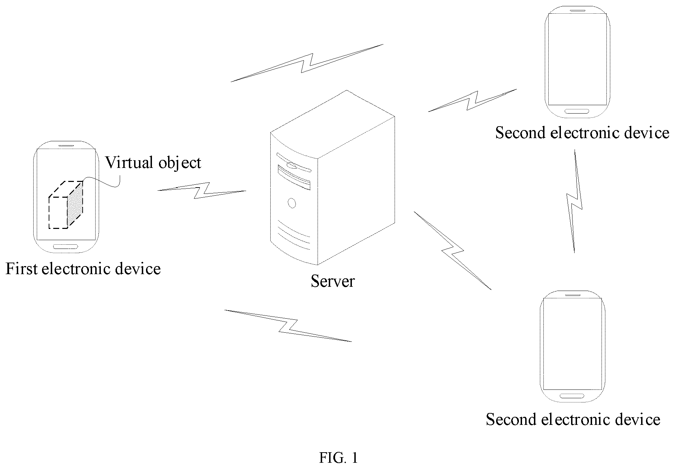

FIG. 1 is a schematic diagram of an application architecture according to an embodiment of this application. As shown in FIG. 1, the application architecture includes a plurality of electronic devices and a server. The plurality of electronic devices may include a first electronic device and one or more second electronic devices (two second electronic devices are used as an example in FIG. 1). The one or more second electronic devices are several electronic devices other than the first electronic device. The plurality of electronic devices may communicate with the server, and the plurality of electronic devices may communicate with each other. For example, any device in the application architecture may communicate with another device in a mode of Wireless Fidelity (Wireless Fidelity, Wi-Fi) communication, Bluetooth communication, cellular 2nd, 3rd, 4th, or 5th generation (2/3/4/5 generation, 2G/3G/4G/5G) communication, or the like. It should be understood that another communication mode, including a future communication mode, may be further used between the server and the electronic device. This is not specifically limited herein. It should be noted that the term "one or more second electronic devices" in this embodiment of this application is merely used to represent an electronic device other than the first electronic device, but does not limit whether types of the plurality of electronic devices are the same.

The electronic device may be various types of devices equipped with cameras and display components. For example, the electronic device may be a terminal device such as a mobile phone, a tablet computer, a notebook computer, or a video recorder (for example, in FIG. 1, the electronic device is a mobile phone). Alternatively, the electronic device may be a device used for interaction in a virtual scene, including VR glasses, an AR device, an MR interaction device, or the like. Alternatively, the electronic device may be a wearable electronic device such as a smartwatch or a smart band. Alternatively, the electronic device may be a device carried in a carrier such as a vehicle, a self-driving vehicle, an uncrewed aerial vehicle, or an industrial robot. A specific form of the electronic device is not specifically limited in this embodiment of this application.

In addition, the electronic device may be referred to as user equipment (user equipment, UE), a subscriber station, a mobile unit, a subscriber unit, a radio unit, a remote unit, a mobile device, a wireless device, a wireless communication device, a remote device, a mobile subscriber station, a terminal device, an access terminal, a mobile terminal, a wireless terminal, an intelligent terminal, a remote terminal, a handset, a user agent, a mobile client, a client, or another appropriate term.

The server may be one or more physical servers (one physical server is used as an example in FIG. 1), or may be a computer cluster, or may be a virtual machine or a cloud server in a cloud computing scenario, or the like.

In this embodiment of this application, a virtual scene application program (application, APP) such as a VR application, an AR application, or an MR application may be installed in the electronic device, and the VR application, the AR application, or the MR application may be run based on a user operation (for example, tap, touch, slide, shake, or voice control). The electronic device may collect visual information of any object in an environment by using a sensor, and then display a virtual object on a display component based on the collected visual information. The virtual object may be a virtual object (that is, an object in a virtual environment) in a VR scene, an AR scene, or an MR scene.

In this embodiment of this application, a navigation application program, a detection application program, or a control application program may be installed in the electronic device, and a corresponding application may be run based on a user operation or a preset program. The electronic device may perform path planning, object detection, carrier operations, and other applications based on a pose and other status information of the electronic device in the current environment.

The pose is location and orientation information of the electronic device, and may be an absolute pose in a world coordinate system, or may be a relative pose relative to a point in the environment.

The visual information in this embodiment of this application includes but is not limited to an image or a video (without depth information) collected by a camera, an image or a video with depth information collected by a depth sensor (depth sensor), data collected by a LiDAR (LiDAR), or data collected by a millimeter-wave radar (RaDAR).

It should be noted that, in this embodiment of this application, the virtual scene application program in the electronic device may be a built-in application program in the electronic device, or may be an application program provided by a third-party service provider and installed by a user. This is not specifically limited herein.

In this embodiment of this application, a simultaneous localization and mapping (simultaneous localization and mapping, SLAM) system may be further configured for the electronic device. The SLAM system can create a map in a completely unknown environment, and use the map to perform positioning, pose (location and pose) determining, navigation, and the like. In this embodiment of this application, the map created by the SLAM system is referred to as a SLAM map. The SLAM map may be understood as a map drawn by the SLAM system based on environment information collected by a collection device. The collection device may include a visual information collection apparatus and an inertial measurement unit (inertial measurement unit, IMU) in the electronic device. The visual information collection apparatus may include, for example, a camera, a camcorder, a depth camera, a LiDAR, or a millimeter-wave radar. The IMU may include, for example, a sensor such as a gyroscope or an accelerometer.

In this embodiment of this application, the SLAM map is also referred to as a 3D map. It should be noted that the 3D map includes but is not limited to the SLAM map, and may further include a three-dimensional map created by using another technology. This is not specifically limited in this embodiment of this application.

In a possible implementation, the 3D map may include a plurality of 3D map points, and correspondingly, data of the 3D map may include data of the plurality of 3D map points. A 3D map point is a point of interest or a point with a salient feature in the environment.

A possible manner of obtaining 3D map points is: using a plurality of devices such as a LiDAR, an uncrewed aerial vehicle for aerial photography (oblique photography) at a viewing angle, a high-definition panoramic camera, a high-definition industrial camera, and the like for photographing, and using a method such as oriented fast and rotated brief (ORB), scale-invariant feature transform (scale-invariant feature transform, SIFT), a speeded up robust feature (speeded up robust feature, SURF), a binary robust independent elementary feature (binary robust independent elementary feature, BRIEF), a binary robust invariant scalable keypoint (binary robust invariant scalable keypoint, BRISK), a fast retina keypoint (fast retina keypoint, FREAK), D2Net, or a feature point detection and descriptor extraction (SuperPoint) method based on self-supervised training to extract 3D map points from data captured by the foregoing devices.

Data of a 3D map point may include:
(1) A 3D map point descriptor
   The 3D map point descriptor is a vector (vector), used to represent a local feature of the corresponding 3D map point. In a visual positioning algorithm, a 3D map point descriptor is used to perform matching between 3D map points. A possible method is to calculate a distance (which may be a Euclidean distance, an inner product distance, a Hamming distance, or the like) between two 3D map point descriptors. When the distance is less than a threshold, it is considered that the two 3D map points match.
(2) A spatial location of the 3D map point

The spatial location of the 3D map point may be represented by using an x-axis, a y-axis, and a z-axis in three-dimensional space, or may be represented by using longitude, latitude, and altitude, or may be represented by using polar coordinates, or the like. A method for representing the spatial location of the 3D map point is not specifically limited in this embodiment of this application. The spatial location of the 3D map point may be an absolute location of the 3D map point, or may be a relative position of the 3D map point. For example, using a central position of an entire zone as an origin, spatial locations of all 3D map points are offset positions relative to a spatial location of the origin.

In this embodiment of this application, a number may be assigned to each 3D map point and written into the data of the 3D map, or a storage sequence of the plurality of 3D map points in memory may be used to implicitly indicate numbers of the 3D map points. It should be noted that a sequence of the plurality of 3D map points included in the 3D map is of no practical significance. Therefore, the foregoing numbers may be considered as identifiers used to identify the 3D map points, to distinguish between the 3D map points. However, the numbers are not used to limit the sequence of the plurality of 3D map points. For example, the 3D map includes three 3D map points numbered 1, 2, and 3, and the three 3D map points may be processed in a sequence of 1, 2, and 3, or may be processed in a sequence of 3, 2, and 1, or may be processed in a sequence of 2, 1, and 3.

In a possible implementation, the data of the 3D map further includes a plurality of zone descriptors, and any one of the plurality of zone descriptors is used to describe features of some or all of the plurality of 3D map points. In other words, for any one of the plurality of zone descriptors, the zone descriptor may be used to describe features of some or all of the plurality of 3D map points. Therefore, the zone descriptor is in a one-to-many relationship with the 3D map points. A feature of each of the plurality of 3D map points may be described by some or all of the plurality of zone descriptors. Therefore, the 3D map point is in a one-to-many relationship with the zone descriptors. It can be learned that the plurality of zone descriptors are in a many-to-many relationship with the plurality of 3D map points. A method for generating zone descriptors includes but is not limited to a conventional method such as a bag of words (bag of words, BOW) or a vector of locally aggregated descriptors (vector of locally aggregated descriptors, VLAD) and a new method based on NetVLAD or artificial intelligence (artificial intelligence, AI). Similarly, numbers may also be used to identify the plurality of zone descriptors, to distinguish between the plurality of zone descriptors. However, the numbers do not limit a sequence of the plurality of zone descriptors either.

In a possible implementation, the data of the 3D map further includes a correspondence between 3D map points and descriptors, and the correspondence clearly describes 3D map points corresponding to any descriptor and descriptors corresponding to any 3D map point.

Optionally, the correspondence may be explicitly described by using a correspondence table between numbers of zone descriptors and numbers of 3D map points. For example, the 3D map includes three zone descriptors numbered T1 to T3 and six 3D map points, where numbers of spatial locations of the six 3D map points are P₁ to P₆, and numbers of the six 3D map point descriptors are F₁ to F₆. The correspondence table is shown in Table 1.

**Table 1**

| Zone descriptor | Spatial location of a 3D map point | 3D map point descriptor |
|---|---|---|
| T1 | P₁ | F₁ |
| | P₂ | F₂ |
| | P₃ | F₃ |
| T2 | P₂ | F₂ |
| | P₃ | F₃ |
| T3 | P₃ | F₃ |
| | P₄ | F₄ |
| | P₅ | F₅ |
| | P₆ | F₅ |

It should be noted that Table 1 is an example of a correspondence table between numbers of zone descriptors and numbers of 3D map points. However, the correspondence table may also be presented in another format or manner. This is not specifically limited in this application.

Optionally, the correspondence may also be implicitly described by using storage locations of zone descriptors and 3D map points. For example, T1 is stored in the memory first, then data of P₁, P₂, and P₃ is stored, then T2 is stored, then data of P₂ and P₃ is stored, finally T3 is stored, and then data of P₃, P₄, P₅, and P₆ is stored.

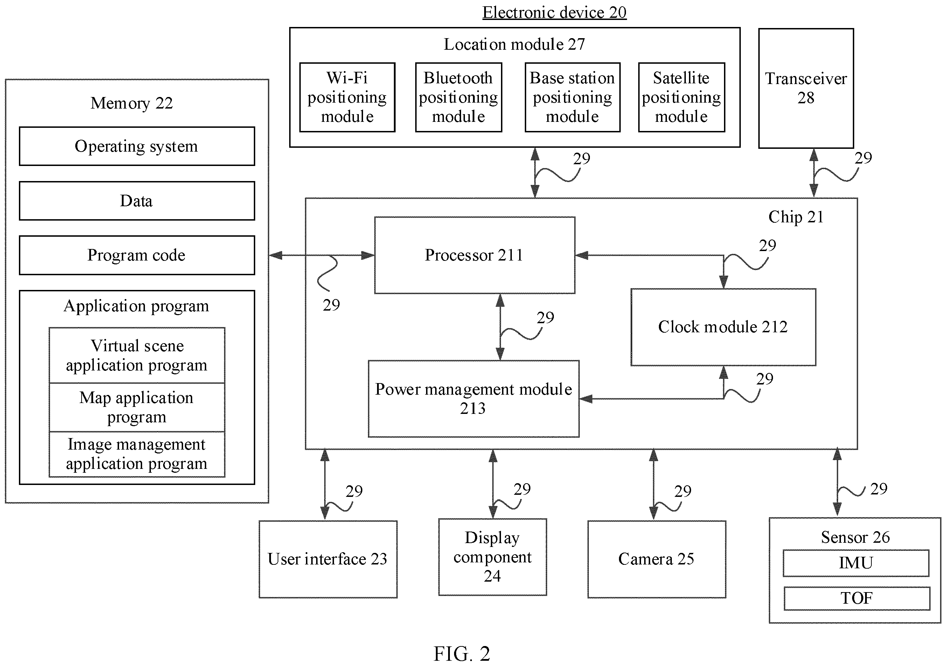

FIG. 2 is a schematic diagram of a structure of an electronic device 20 according to an embodiment of this application. As shown in FIG. 2, the electronic device 20 may be at least one of the first electronic device and one or more second electronic devices in the embodiment shown in FIG. 1. It should be understood that the structure shown in FIG. 2 does not constitute a specific limitation on the electronic device 20. In some other embodiments of this application, the electronic device 20 may include more or fewer components than those in the structure shown in FIG. 2, some components may be combined, or some components may be split, or different component arrangements may be used. Each component shown in FIG. 2 may be implemented in hardware including one or more signal processing and/or application-specific integrated circuits, software, or a combination of hardware and software.

The electronic device 20 may include a chip 21, a memory 22 (one or more computer-readable storage media), a user interface 23, a display component 24, a camera 25, a sensor 26, a positioning module 27 configured to perform device positioning, and a transceiver 28 configured to perform communication. These components may communicate with each other by using one or more buses 29.

One or more processors 211, a clock module 212, and a power management module 213 may be integrated into the chip 21. The clock module 212 integrated in the chip 21 is mainly configured to provide a timer required for data transmission and time sequence control for the processor 211, where the timer may implement clock functions for data transmission and time sequence control. The processor 211 may generate an operation control signal based on instruction operation code and a timing signal, to control instruction fetching and instruction execution. The power management module 213 integrated in the chip 21 is mainly configured to provide stable and high-precision voltages for the chip 21 and other components of the electronic device 20.

The processor 211 may also be referred to as a central processing unit (central processing unit, CPU). The processor 211 may specifically include one or more processing units. For example, the processor 211 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

In a possible implementation, the processor 211 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The memory 22 may be connected to the processor 211 by using the bus 29, or may be coupled to the processor 311. The memory 22 is configured to store various software programs and/or a plurality of groups of instructions. The memory 22 may include a high-speed random access memory (for example, a cache), or may include a nonvolatile memory, for example, one or more magnetic disk storage devices, a flash memory device, or another nonvolatile solid-state storage device. The memory 22 may store an operating system, for example, an embedded operating system such as Android (Android), an Apple mobile platform (iOS), a Microsoft Windows operating system (Windows), or Linux. The memory 22 may further store data, for example, image data, point cloud data, 3D map data, pose data, coordinate system conversion information, and map update information. The memory 22 may further store computer-executable program code. The computer-executable program code includes an instruction, for example, a communication program instruction or a related program instruction of a SLAM system. The memory 22 may further store one or more application programs, for example, a virtual scene application program such as AR/VR/MR, a map application program, an image management application program, and a navigation and control application program. The memory 22 may further store a user interface program. The user interface program may vividly display content of an application program, for example, a virtual object in a virtual scene such as AR/VR/MR, by using a graphical operation interface, and present the content by using the display component 24, and receive an application program control operation of a user by using an input control such as a menu, a dialog box, or a button.

The user interface 23 may be, for example, a touch panel. The touch panel may detect an operation instruction of the user on the touch panel. The user interface 23 may alternatively be, for example, a keypad, a physical button, or a mouse.

The electronic device 20 may include one or more display components 24. The electronic device 20 may implement a display function together with the display component 24, the graphics processing unit (GPU) and the application processor (AP) in the chip 21, and the like. The GPU is a microprocessor for implementing image processing. The GPU is connected to the display component 24 and the application processor. The GPU performs mathematical and geometric calculation for graphics rendering. The display component 24 may display interface content output by the electronic device 20, for example, display an image, a video, or the like in a virtual scene such as AR/VR/MR. The interface content may include an interface of a running application program, a system-level menu, or the like, and may specifically include the following interface elements: an input interface element, such as a button (Button), a text (Text) input box, a scroll bar (Scroll Bar), or a menu (Menu), and an output interface element, such as a window (Window), a label (Label), an image, a video, or an animation.

The display component 24 may be a display panel, a lens (for example, VR glasses), a projection screen, or the like. The display panel may also be referred to as a display screen, for example, may be a touchscreen, a flexible screen, a curved screen, or the like, or may be another optical component. It should be understood that the display screen of the electronic device in this embodiment of this application may be a touchscreen, a flexible screen, a curved screen, or a screen in another form. In other words, the display screen of the electronic device has an image display function, but a specific material and shape of the display screen are not specifically limited.

For example, when the display component 24 includes a display panel, the display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In addition, in a possible implementation, the touch panel in the user interface 23 may be coupled to the display panel in the display component 24. For example, the touch panel may be disposed below the display panel, the touch panel is configured to detect touch pressure applied to the display panel when the user performs a touch operation (for example, tap, slide, or touch) by using the display panel, and the display panel is configured to display content.

The camera 25 may be a monocular camera, a binocular camera, or a depth camera, and is configured to photograph or record an environment to obtain an image or a video. The image or video image collected by the camera 25 may be, for example, used as input data of the SLAM system, or the image or video may be displayed by using the display component 24.

In a possible implementation, the camera 25 may also be considered as a sensor. The image collected by the camera 25 may be in an IMG format, or may be in another format type. This is not specifically limited in this embodiment of this application.

The sensor 26 may be configured to collect data related to a status change (for example, rotation, swing, movement, or shake) of the electronic device 20. The data collected by the sensor 26 may be used as input data of the SLAM system. The sensor 26 may include one or more sensors, for example, an inertial measurement unit (inertial measurement unit, IMU) and a time of flight (time of flight, TOF) sensor. The IMU may include sensors such as a gyroscope and an accelerometer. The gyroscope is configured to measure an angular velocity of the electronic device when the electronic device moves, and the accelerometer is configured to measure an acceleration of the electronic device when the electronic device moves. The TOF sensor may include an optical transmitter and an optical receiver. The optical transmitter is configured to transmit light, for example, a laser, infrared, or a radar wave. The optical receiver is configured to detect reflected light, for example, a reflected laser, infrared, or radar wave.

It should be noted that the sensor 26 may further include more other sensors, such as an inertial sensor, a barometer, a magnetometer, and a cyclometer. This is not specifically limited in this embodiment of this application.

The positioning module 27 is configured to implement physical positioning of the electronic device 20, for example, configured to obtain an initial location of the electronic device 20. The positioning module 27 may include one or more of a Wi-Fi positioning module, a Bluetooth positioning module, a base station positioning module, and a satellite positioning module. A global navigation satellite system (global navigation satellite system, GNSS) may be disposed in the satellite positioning module to assist in positioning. The GNSS is not limited to a BeiDou system, a global positioning system (global positioning system, GPS) system, a GLONASS (global navigation satellite system, GLONASS) system, and a Galileo navigation satellite system (Galileo) system.

The transceiver 28 is configured to implement communication between the electronic device 20 and another device (for example, a server or another electronic device). The transceiver 28 integrates a transmitter and a receiver respectively configured to send and receive radio frequency signals. In a specific implementation, the transceiver 28 includes but is not limited to an antenna system, a radio frequency (radio frequency, RF) transceiver, one or more amplifiers, a tuner, one or more oscillators, a digital signal processor, a codec (CODEC) chip, a subscriber identity module (subscriber identity module, SIM) card, a storage medium, and the like. In a possible implementation, the transceiver 28 may be further implemented on a separate chip. The transceiver 28 supports data communication in at least one of 2G, 3G, 4G, and 5G networks, and the like, and/or supports at least one of the following short-range wireless communication modes: Bluetooth (Bluetooth, BT) communication, Wireless Fidelity (Wireless Fidelity, Wi-Fi) communication, near field communication (near field communication, NFC), infrared (infrared, IR) wireless communication, ultra-wideband (ultra wide band, UWB) communication, and ZigBee (ZigBee) communication.

In this embodiment of this application, the processor 211 runs the program code stored in the memory 22, to perform various function applications and data processing of the electronic device 20.

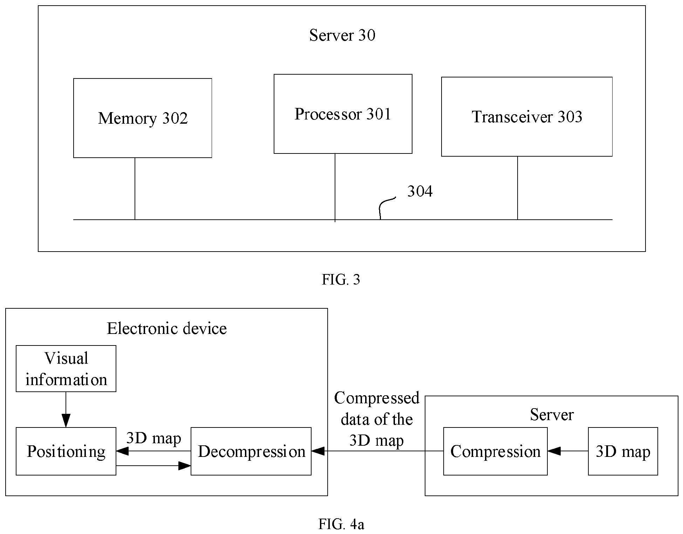

FIG. 3 is a schematic diagram of a structure of a server 30 according to an embodiment of this application. As shown in FIG. 3, the server 30 may be the server in the embodiment shown in FIG. 1. The server 30 includes a processor 301, a memory 302 (one or more computer-readable storage media), and a transceiver 303. These components may communicate with each other by using one or more buses 304.

The processor 301 may be one or more CPUs. When the processor 301 is one CPU, the CPU may be a single-core CPU, or may be a multi-core CPU.

The memory 302 may be connected to the processor 301 by using the bus 304, or may be coupled to the processor 301. The memory 302 is configured to store various types of program code and/or a plurality of groups of instructions, and data (for example, map data and pose data). In a specific implementation, the memory 302 includes but is not limited to a random access memory (Random Access Memory, RAM), a read-only memory (Read-Only Memory, ROM), an erasable programmable read-only memory (Erasable Programmable Read Only Memory, EPROM), a compact disc read-only memory (Compact Disc Read-Only Memory, CD-ROM), or the like.

The transceiver 303 mainly integrates a receiver and a transmitter. The receiver is configured to receive data (for example, a request or an image) sent by an electronic device, and the transmitter is configured to send data (for example, map data or pose data) to the electronic device.

It should be understood that the server 30 shown in FIG. 3 is merely an example provided in this embodiment of this application. The server 30 may further have more components than those shown in the figure. This is not specifically limited in this embodiment of this application.

In this embodiment of this application, the processor 301 runs the program code stored in the memory 302, to perform various function applications and data processing of the server 30.

The term "coupling" used in this embodiment of this application means a direct connection or a connection through one or more intermediate components or circuits.

FIG. 4a is a schematic diagram of an application scenario according to an embodiment of this application. As shown in FIG. 4a, in the application scenario, an electronic device collects visual information by using a sensor, and determines a current pose of the electronic device with reference to the visual information and a 3D map from a server.

The 3D map is provided by the server. To be specific, the server creates the 3D map, then performs compression processing on the 3D map, and transmits compressed data of the 3D map to the electronic device. After receiving the compressed data of the 3D map, the electronic device performs decompression processing to obtain reconstructed data of the 3D map, and determines the current pose of the electronic device with reference to the collected visual information and the reconstructed data of the 3D map. The pose is location information of the electronic device, and may be an absolute pose in a world coordinate system, or may be a relative pose relative to a point in an environment.

In this embodiment of this application, the server may create the 3D map in advance, and after performing compression processing, store the 3D map locally, so that storage space can be saved. In addition, the server may alternatively transmit the compressed data of the 3D map to another device, for example, cloud storage.
1. The server creates the 3D map, compresses the 3D map to obtain the compressed data of the 3D map, and stores the compressed data locally.
   The server performs compression processing on the 3D map to save local storage space.
2. The electronic device sends a map download request to the server. The map download request is triggered in two manners:
   (1) A user starts a map application program installed in the electronic device, and the application program uploads, to a server corresponding to the application program, location information obtained based on GPS positioning or Wi-Fi positioning. The upload operation may trigger a map download request. Because uploaded content includes the location information, the server can perform preliminary estimation based on the location information, and transmit, to the electronic device, compressed data of a 3D map of a zone to which a positioning point indicated by the location information belongs. An extent of the zone to which the positioning point indicated by the location information belongs may be preset. For example, the zone to which the positioning point belongs may be an administrative region (including a county, a city, a country, an administrative region, or the like) on each level in which the positioning point is located, or may be a circular zone with the positioning point as a center and a specified distance as a radius.
   (2) A user starts a map application program installed in the electronic device, and actively enters or selects a zone in the application program. For example, the user actively enters "xx business center" or selects "street A" from a list "street A, street B, and street C". The foregoing operation of the user may trigger a map download request. Regardless of whether the user enters or selects a geographical location, the server transmits compressed data of a 3D map of the geographical location to the electronic device.

   It should be understood that, in this embodiment of this application, the map download request may also be triggered in another manner in addition to the foregoing two manners. For example, the electronic device automatically detects whether a condition for downloading the 3D map or starting to download the 3D map is met, or the electronic device starts to download the 3D map by detecting an ambient light change or an environment change, to request to download a 3D map within an extent of a zone from the server. A size of the extent of the zone is not specifically limited.
3. The server sends the compressed data of the 3D map to the electronic device.
4. The electronic device collects the visual information by using the sensor.
   It should be noted that step 3 and step 4 are independent of each other and that a sequence thereof is not limited.
5. The electronic device decompresses the compressed data of the 3D map to obtain the reconstructed data of the 3D map.
6. The electronic device performs positioning on the 3D map based on the visual information to obtain the pose corresponding to the visual information.

After receiving the compressed data of the 3D map, the electronic device does not need to immediately decompress the compressed data, and only needs to decompress the compressed data to obtain the reconstructed data of the 3D map before performing positioning based on the visual information. For example, the user may download compressed data of a 3D map within an extent of a zone in advance in a manner of downloading an "offline map", and decompress the compressed data of the 3D map only when positioning is required.

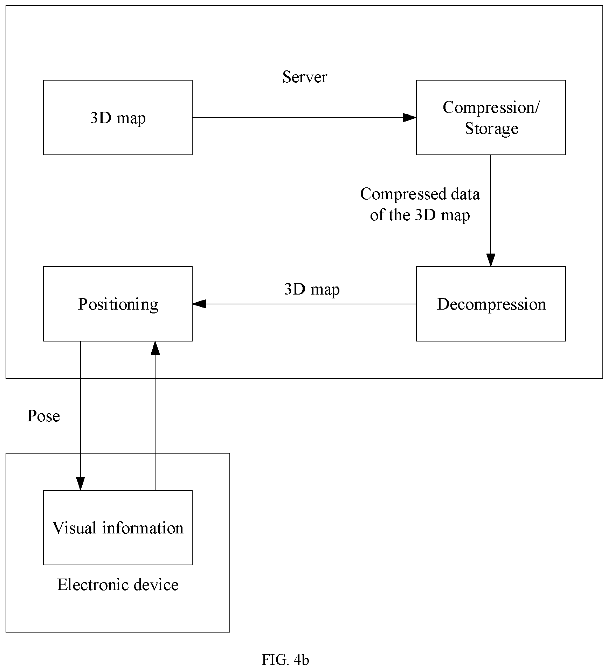

FIG. 4b is a schematic diagram of an application scenario according to an embodiment of this application. As shown in FIG. 4b, in the application scenario, an electronic device collects visual information by using a sensor, and a server determines a current pose of the electronic device with reference to the visual information of the electronic device and a 3D map.

The 3D map is provided by the server. To be specific, the server creates the 3D map, then compresses the 3D map, and stores compressed data of the 3D map locally. When receiving the visual information from the electronic device, the server performs decompression processing to obtain reconstructed data of the 3D map, and determines the current pose of the electronic device with reference to the visual information and the reconstructed data of the 3D map.
1. The server creates the 3D map, compresses the 3D map to obtain the compressed data of the 3D map, and stores the compressed data locally.
2. The electronic device collects the visual information by using the sensor.
3. The electronic device sends the visual information to the server.
4. The server decompresses the compressed data of the 3D map to obtain the reconstructed data of the 3D map.
   It should be understood that the server performs compression processing on the 3D map to save storage space.
5. The server performs positioning on the 3D map based on the visual information to obtain the pose corresponding to the visual information.
6. The server sends the pose to the electronic device.

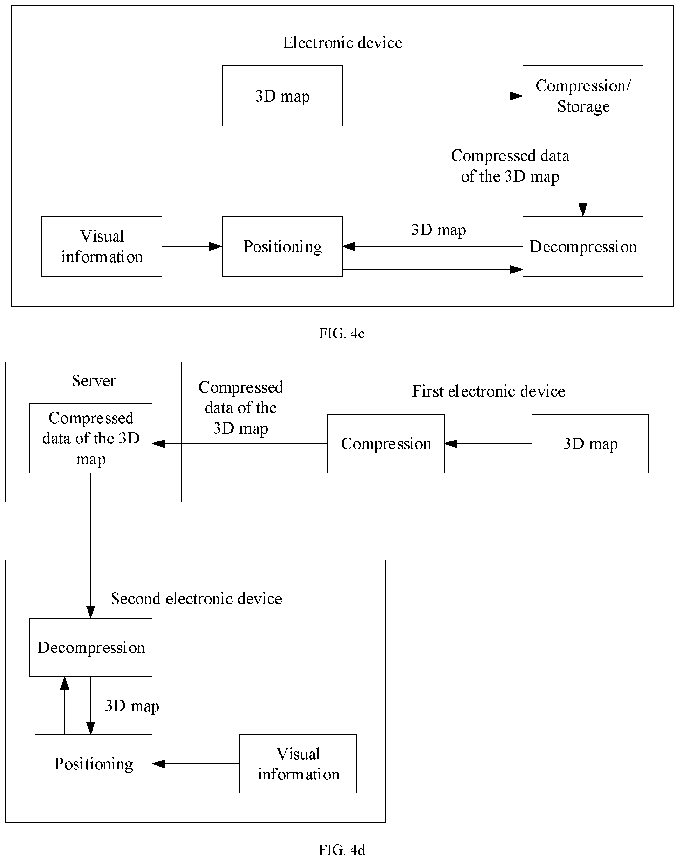

FIG. 4c is a schematic diagram of an application scenario according to an embodiment of this application. As shown in FIG. 4c, in the application scenario, an electronic device collects visual information by using a sensor, and determines a current pose of the electronic device with reference to the collected visual information and a 3D map.

The 3D map is provided by the electronic device. To be specific, the electronic device creates the 3D map, then compresses the 3D map, and stores compressed data of the 3D map locally. When the visual information is collected, the electronic device performs decompression processing to obtain reconstructed data of the 3D map, and determines the current pose of the electronic device with reference to the collected visual information and the reconstructed data of the 3D map.
1. The electronic device creates the 3D map, compresses the 3D map to obtain the compressed data of the 3D map, and stores the compressed data locally.
   It should be understood that the electronic device performs compression processing on the 3D map to save storage space.
2. The electronic device collects the visual information by using the sensor.
3. The electronic device decompresses the compressed data of the 3D map to obtain the reconstructed data of the 3D map.
4. The electronic device performs positioning on the 3D map based on the visual information to obtain the pose corresponding to the visual information.

FIG. 4d is a schematic diagram of an application scenario according to an embodiment of this application. As shown in FIG. 4b, in the application scenario, a second electronic device collects visual information by using a sensor, and determines a current pose of the second electronic device with reference to the visual information and a 3D map from a server.

The 3D map is created by a first electronic device. To be specific, the first electronic device creates the 3D map, performs compression processing on the 3D map, and then sends compressed data of the 3D map to the server. Then the server sends the compressed data of the 3D map to the second electronic device. The second electronic device performs decompression processing to obtain reconstructed data of the 3D map, and determines the current pose of the second electronic device with reference to the collected visual information and the reconstructed data of the 3D map.

In this embodiment of this application, the first electronic device may create the 3D map in advance, and after performing compression processing, transmit the 3D map to the server, so that transmission bandwidth can be saved.
1. The first electronic device creates the 3D map and compresses the 3D map to obtain the compressed data of the 3D map.
2. The first electronic device sends the compressed data of the 3D map to the server.
   Because the first electronic device transmits the 3D map after compression processing, transmission bandwidth can be saved, and transmission efficiency can be improved.
3. The second electronic device sends a map download request to the server.
   Alternatively, the second electronic device may send the map download request based on the trigger manner shown in FIG. 4a.
4. The server sends the compressed data of the 3D map to the second electronic device.
5. The second electronic device decompresses the compressed data of the 3D map to obtain the reconstructed data of the 3D map.
6. The second electronic device collects the visual information by using the sensor.
7. The second electronic device performs positioning on the 3D map based on the visual information to obtain the pose corresponding to the visual information.

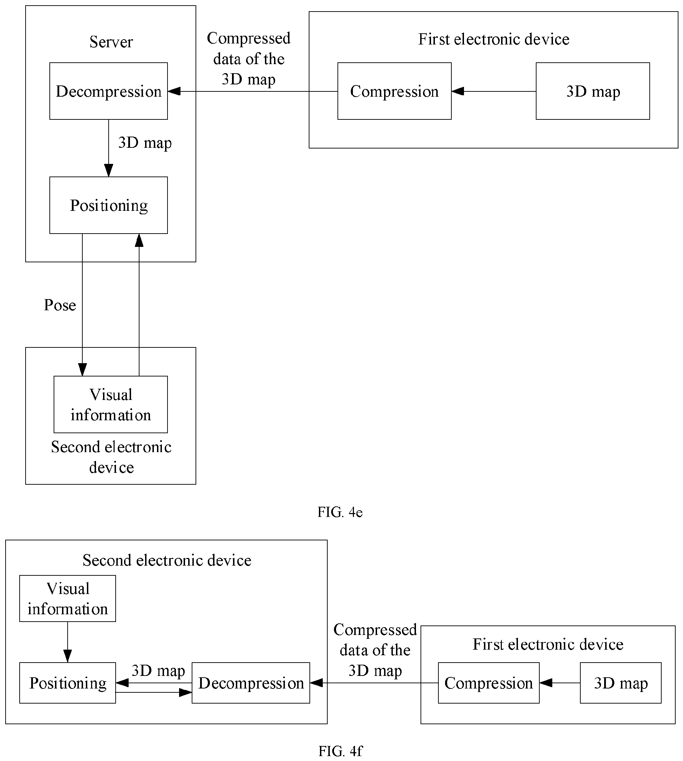

FIG. 4e is a schematic diagram of an application scenario according to an embodiment of this application. As shown in FIG. 4c, in the application scenario, a second electronic device collects visual information by using a sensor, and a server determines a current pose of the second electronic device with reference to the visual information from the second electronic device and a 3D map from a first electronic device.

The 3D map is created by the first electronic device. To be specific, the first electronic device creates the 3D map, performs compression processing on the 3D map, and then sends compressed data of the 3D map to the server. The server performs decompression processing to obtain reconstructed data of the 3D map, and determines the current pose of the second electronic device with reference to the visual information from the second electronic device and the reconstructed data of the 3D map.
1. The first electronic device creates the 3D map and compresses the 3D map to obtain the compressed data of the 3D map.
2. The first electronic device sends the compressed data of the 3D map to the server.
3. The second electronic device collects the visual information by using the sensor.
4. The second electronic device sends a positioning request to the server, where the positioning request carries the visual information.
5. The server decompresses the compressed data of the 3D map to obtain the reconstructed data of the 3D map.
6. The server performs positioning on the 3D map based on the visual information to obtain the pose corresponding to the visual information.
7. The server sends the pose obtained through positioning to the second electronic device.

FIG. 4f is a schematic diagram of an application scenario according to an embodiment of this application. As shown in FIG. 4d, in the application scenario, a second electronic device collects visual information by using a sensor, and determines a current pose of the second electronic device with reference to the visual information and a 3D map from a first electronic device.

The 3D map is created by the first electronic device. To be specific, the first electronic device creates the 3D map, performs compression processing on the 3D map, and then sends compressed data of the 3D map to the second electronic device. The second electronic device performs decompression processing to obtain reconstructed data of the 3D map, and determines the current pose of the second electronic device with reference to the collected visual information and the 3D map from the first electronic device.
1. The first electronic device creates the 3D map, compresses the 3D map to obtain the compressed data of the 3D map, and stores the compressed data locally.
2. The second electronic device sends a map download request to the first electronic device.
3. The first electronic device sends the compressed data of the 3D map to the second electronic device.
4. The second electronic device decompresses the compressed data of the 3D map to obtain the reconstructed data of the 3D map.
5. The second electronic device collects the visual information by using the sensor.
6. The second electronic device performs positioning on the 3D map based on the visual information to obtain the pose corresponding to the visual information.

The positioning algorithm used in the embodiments shown in FIG. 4a to FIG. 4f may include the following steps.
(1) Extract a to-be-retrieved zone descriptor from the visual information, where an algorithm used to extract the to-be-retrieved zone descriptor is consistent with an algorithm used to extract a zone descriptor from the 3D map.
(2) Extract a to-be-retrieved 3D map point from the visual information, and obtain a spatial location of the to-be-retrieved 3D map point and a to-be-retrieved 3D map point descriptor, where an algorithm used to extract the to-be-retrieved 3D map point descriptor is consistent with an algorithm used to extract a 3D map point descriptor from the 3D map.
(3) Retrieve, based on the to-be-retrieved zone descriptor, a plurality of candidate zone descriptors from a plurality of zone descriptors included in the data of the 3D map.
   In embodiments of this application, a distance between the to-be-retrieved zone descriptor and each of the plurality of zone descriptors may be calculated. The distance may include a Hamming distance, a Manhattan distance, a Euclidean distance, or the like. Then at least one zone descriptor that meets a condition (for example, the distance is less than a threshold) is selected as a candidate zone descriptor.
(4) Separately match the to-be-retrieved 3D map point descriptor with 3D map point descriptors corresponding to the plurality of candidate zone descriptors, where the matching is to calculate a similarity between the to-be-retrieved 3D map point descriptor and each of the 3D map point descriptors corresponding to the plurality of candidate zone descriptors, to find a most similar 3D map point.
(5) Based on the matched 3D map point, obtain the pose of the electronic device through calculation by using a pose solution algorithm such as perspective n-point camera pose estimation (perspective-n-point, PnP) or efficient perspective n-point camera pose estimation (efficient perspective-n-point camera pose estimation, EPnP).

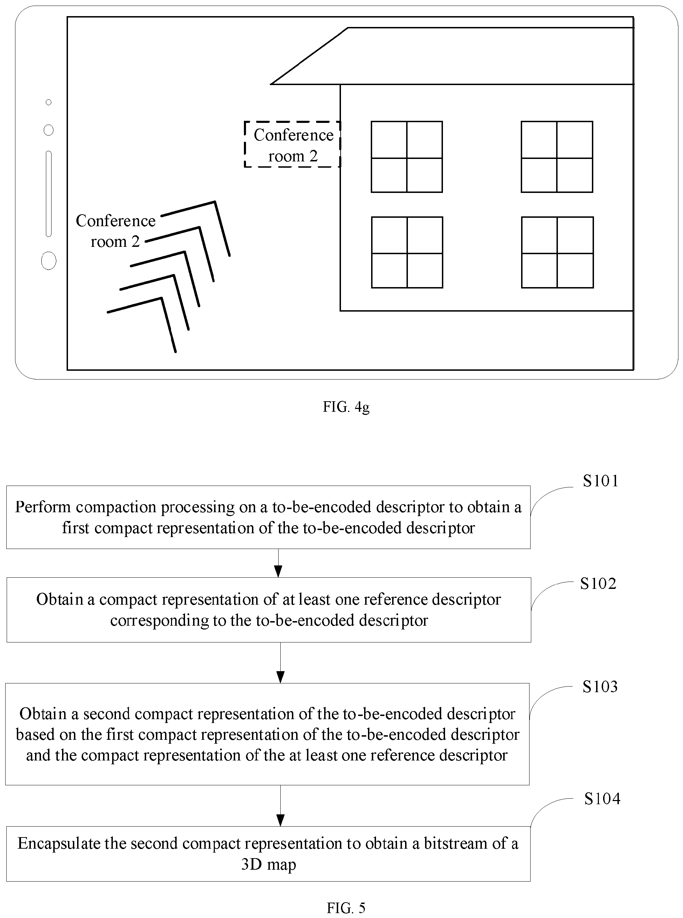

In any one of the application scenarios in FIG. 4a to FIG. 4f, positioning is performed based on the 3D map in embodiments of this application to obtain the current pose of the electronic device. The pose may be applied to the fields of AR navigation, AR man-machine interaction, assisted driving, autonomous driving, and the like. Assuming that AR navigation is performed based on the pose, FIG. 4g is a schematic diagram of a user interface displayed by the electronic device according to an embodiment of this application. The electronic device may display, based on the pose, the user interface shown in FIG. 4g. The user interface may include a navigation arrow indication for navigating to conference room 2, and the navigation arrow indication for navigating to conference room 2 may be a virtual object obtained from the server or obtained locally based on the pose. The user interface may further include the visual information collected by the sensor, for example, a building shown in FIG. 4g. The user goes to conference room 2 with reference to the user interface of the electronic device as shown in FIG. 4g.

It should be noted that the reconstructed data of the 3D map that is obtained through decompression in embodiments of this application may also be referred to as reestablished data of the 3D map.

The embodiments shown in FIG. 4a to FIG. 4f all relate to compression processing and decompression processing on the 3D map. Embodiments of this application provide a plurality of methods for performing the foregoing compression processing and decompression processing. The following describes the compression processing and decompression processing methods.

Based on the foregoing description, the following provides a 3D map compression method provided in an embodiment of this application. For convenience, the method embodiments described below are expressed as a combination of a series of action steps. However, a person skilled in the art should understand that specific implementations of the technical solutions of this application are not limited to a sequence of the described series of action steps.

FIG. 5 is a schematic flowchart of a 3D map compression method according to an embodiment of this application. In some implementations, the method may be applied to the electronic device shown in any one of FIG. 1 to FIG. 4f, or may be applied to the server shown in any one of FIG. 1 to FIG. 4f. This method includes but is not limited to the following steps.

S101. Perform compaction processing on a to-be-encoded descriptor to obtain a first compact representation of the to-be-encoded descriptor.

The to-be-encoded descriptor corresponds to at least one 3D map point on a 3D map. The to-be-encoded descriptor may be a zone descriptor, and the zone descriptor corresponds to a plurality of 3D map points on the 3D map. Alternatively, the to-be-encoded descriptor may be a 3D map point descriptor, and the 3D map point descriptor corresponds to one 3D map point on the 3D map.

In a possible implementation, quantization processing is performed on the to-be-encoded descriptor to obtain the first compact representation of the to-be-encoded descriptor. The quantization processing includes but is not limited to: scalar quantization, vector quantization, product quantization, or the like. For example, the to-be-encoded descriptor may be mapped to one or more quantization indexes through the quantization processing, and the one or more quantization indexes are the first compact representation of the to-be-encoded descriptor. Each of the one or more quantization indexes corresponds to one quantization center.

In another possible implementation, binarization processing is performed on the to-be-encoded descriptor to obtain the first compact representation of the to-be-encoded descriptor. The binarization processing includes but is not limited to iterative quantization (iterative quantization, ITQ) hashing, locality-sensitive hashing (locality-sensitive hashing, LSH), a spectral hashing method (spectral hashing), or the like. For example, the binarization processing may map the to-be-encoded descriptor to Hamming space (also referred to as binary space) to obtain a binary representation, where the binary representation is the first compact representation of the to-be-encoded descriptor.

Regardless of whether the quantization processing or the binarization processing is performed, a quantity of bits in the first compact representation of the to-be-encoded descriptor is usually obviously less than a quantity of bits of the original to-be-encoded descriptor. Therefore, an objective of saving storage space and/or transmission bandwidth is achieved.

S102. Obtain a compact representation of at least one reference descriptor corresponding to the to-be-encoded descriptor.

The at least one reference descriptor corresponds to at least one encoded 3D map point on the 3D map. For example, the 3D map point descriptor and a spatial location of the 3D map point are separately encoded, and the at least one encoded 3D map point may be at least one encoded 3D map point descriptor. Encoding of the spatial location of the 3D map point is not specifically limited in this embodiment of this application. Certainly, it may be understood that in some cases, the at least one encoded 3D map point may be the at least one encoded 3D map point descriptor and a spatial location of the at least one encoded 3D map point. This is not limited in this embodiment of this application.

Similar to the compaction processing performed on the to-be-encoded descriptor, in some embodiments, compaction processing may be performed on the at least one reference descriptor to obtain the compact representation of the at least one reference descriptor. For example, if quantization processing is performed on the to-be-encoded descriptor to obtain the first compact representation of the to-be-encoded descriptor, quantization processing is performed on the at least one reference descriptor to obtain the compact representation of the at least one reference descriptor. If binarization processing is performed on the to-be-encoded descriptor to obtain the first compact representation of the to-be-encoded descriptor, binarization processing is performed on the at least one reference descriptor to obtain the compact representation of the at least one reference descriptor.

The at least one reference descriptor corresponding to the to-be-encoded descriptor is described as follows: In a possible implementation, the at least one reference descriptor may include at least one encoded or compressed descriptor before the to-be-encoded descriptor. One reference descriptor is used as an example, and the reference descriptor may be an encoded or compressed descriptor before the to-be-encoded descriptor. In another possible implementation, the at least one reference descriptor may include at least one preset descriptor. The preset descriptor may be flexibly set based on a requirement. For example, the preset descriptor may be 10101010. In still another possible implementation, the at least one reference descriptor may include at least one descriptor determined by using a neural network model or according to a clustering algorithm. The neural network model may be a convolutional neural network (convolutional neural network, CNN), a deep neural network (deep neural network, DNN), a recurrent neural network (recurrent neural networks, RNN), a recursive residual convolutional neural network (recursive residual convolutional neuron network, RR-CNN), or the like. This is not specifically limited in this embodiment of this application. For example, the at least one reference descriptor may be determined based on a plurality of descriptors in a database or a plurality of descriptors of a to-be-retrieved image by using a CNN.

S103. Obtain a second compact representation of the to-be-encoded descriptor based on the first compact representation of the to-be-encoded descriptor and the compact representation of the at least one reference descriptor.

Because the first compact representation of the to-be-encoded descriptor is mapped to the second compact representation, data distribution of the second compact representation is different from data distribution of the first compact representation. In this embodiment of this application, data distribution of the compact representation (for example, the first compact representation or the second compact representation) is distribution of binary numbers in the compact representation. In this embodiment of this application, because the data distribution of the compact representation is changed, a data volume of a bitstream of the 3D map that is subsequently obtained through encapsulation is reduced, and resource overheads required for transmitting the bitstream of the 3D map are reduced.

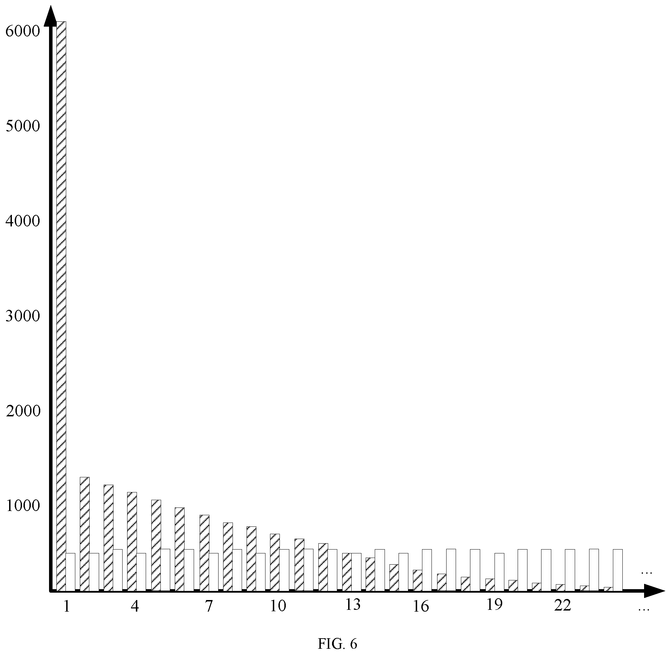

In some embodiments, the first compact representation may include at least one first compact representation substring, and the second compact representation may include at least one second compact representation substring. Correspondingly, a compact representation of each of the at least one reference descriptor includes at least one first reference compact representation substring. FIG. 6 is a schematic diagram of comparison between the data distribution of the second compact representation and the data distribution of the first compact representation according to an embodiment of this application. As shown in FIG. 6, a horizontal axis is a compact representation substring, a vertical axis is an occurrence frequency, a diagonal bar is the data distribution of the first compact representation, and a blank bar is the data distribution of the second compact representation. As can be learned from FIG. 6, the first compact representation substring included in the first compact representation is approximately evenly distributed at different values; however, different from the first compact representation, the second compact representation substring included in the second compact representation is centrally distributed at some values (for example, 0 to 22 in FIG. 6). Therefore, it can be learned that the data distribution of the second compact representation is different from the data distribution of the first compact representation.

It should be noted that FIG. 6 is merely an example for description. The data distribution of the second compact representation in this embodiment of this application may alternatively be in another form. For example, the second compact representation substring included in the second compact representation is centrally distributed at some other values (for example, 230 to 255). The data distribution of the second compact representation in this embodiment of this application is not limited to FIG. 6.

S104. Encapsulate the second compact representation to obtain the bitstream of the 3D map.

Processing such as entropy encoding may be performed on the second compact representation to obtain the bitstream of the 3D map.

It should be noted that the second compact representation obtained by performing compression processing in S101 to S103 may also be referred to as compressed data. Then the compressed data is encapsulated in S104, so that the bitstream of the 3D map is obtained. Such compression processing may also be referred to as encoding processing.

Optionally, this embodiment may be performed by the server, and the server may further receive 3D map request information (for example, the map download request in FIG. 4a) sent by the electronic device, and send, to the electronic device in response to the 3D map request information, the bitstream of the 3D map corresponding to the 3D map request information. Alternatively, this embodiment may be performed by the electronic device, and the electronic device may further send the bitstream of the 3D map to the server. The electronic device may be a user terminal device or an electronic device carried in a carrier.

In some embodiments, a number of the at least one reference descriptor corresponding to the to-be-encoded descriptor or a difference between a number of the reference descriptor and a number of the to-be-encoded descriptor may be further encapsulated, so that the bitstream of the 3D map further carries the number of the at least one reference descriptor or the difference between numbers. During decompression, the at least one reference descriptor may be obtained based on the number of the at least one reference descriptor or the difference between numbers, and decompression is performed based on the at least one reference descriptor.

In this embodiment, compaction processing is performed on the to-be-encoded descriptor to obtain the first compact representation of the to-be-encoded descriptor, the second compact representation of the to-be-encoded descriptor is obtained based on the first compact representation of the to-be-encoded descriptor and the compact representation of the at least one reference descriptor, and the second compact representation is encapsulated to obtain the bitstream of the 3D map. Compaction processing is first performed to reduce a data volume of the to-be-encoded descriptor, and then the first compact representation is mapped to the second compact representation, so that the data distribution of the compact representation is changed, thereby further reducing the data volume of the bitstream of the 3D map that is obtained through encapsulation, and reducing the resource overheads required for transmitting the bitstream of the 3D map.

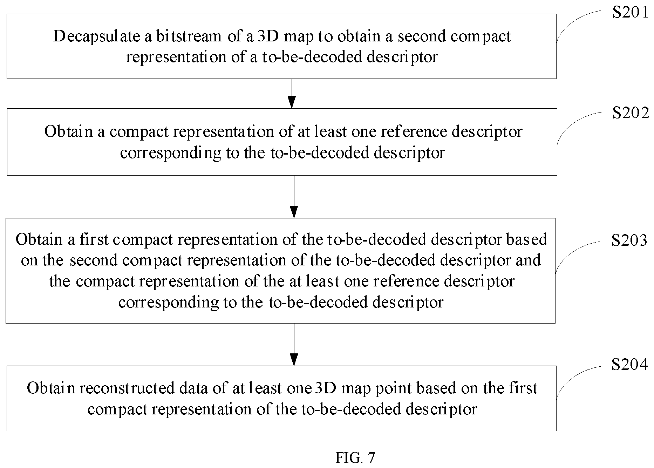

FIG. 7 is a schematic flowchart of a 3D map decompression method according to an embodiment of this application. In some implementations, the method may be applied to the electronic device shown in any one of FIG. 1 to FIG. 4f, or may be applied to the server shown in any one of FIG. 1 to FIG. 4f. This method includes but is not limited to the following steps.

S201. Decapsulate a bitstream of a 3D map to obtain a second compact representation of a to-be-decoded descriptor.

The to-be-decoded descriptor corresponds to at least one 3D map point on the 3D map. The to-be-decoded descriptor may be a zone descriptor, and the zone descriptor corresponds to a plurality of 3D map points on the 3D map. Alternatively, the to-be-decoded descriptor may be a 3D map point descriptor, and the 3D map point descriptor corresponds to one 3D map point on the 3D map.

The second compact representation of the to-be-decoded descriptor in this embodiment is the second compact representation of the to-be-encoded descriptor in the embodiment in FIG. 5.

It should be noted that the second compact representation is obtained by decapsulating the bitstream of the 3D map in S201. Such decompression processing may also be referred to as decoding processing. The second compact representation obtained through decapsulation may also be referred to as compressed data. Then decompression processing is performed on the compressed data in S202 to S204.

S202. Obtain a compact representation of at least one reference descriptor corresponding to the to-be-decoded descriptor.

The at least one reference descriptor corresponds to at least one decoded 3D map point on the 3D map. For example, the 3D map point descriptor and a spatial location of the 3D map point are separately decoded, and the at least one decoded 3D map point may be at least one decoded 3D map point descriptor. Decoding of the spatial location of the 3D map point is not specifically limited in this embodiment of this application. Certainly, it may be understood that in some cases, the at least one decoded 3D map point may be the at least one decoded 3D map point descriptor and a spatial location of the at least one decoded 3D map point. This is not limited in this embodiment of this application.

An explanation and a description of the at least one reference descriptor corresponding to the to-be-decoded descriptor are similar to those of the reference descriptor in the embodiment shown in FIG. 5. In a possible implementation, the at least one reference descriptor may include at least one decoded or decompressed descriptor before the to-be-decoded descriptor. One reference descriptor is used as an example, and the reference descriptor may be a decoded or decompressed descriptor before the to-be-decoded descriptor. In another possible implementation, the at least one reference descriptor may include at least one preset descriptor. The preset descriptor may be flexibly set based on a requirement. For example, the preset descriptor may be 10101010. In still another possible implementation, the at least one reference descriptor may include at least one descriptor determined by using a neural network model or according to a clustering algorithm. In yet another possible implementation, when the bitstream of the 3D map is decapsulated, a number of the at least one reference descriptor corresponding to the to-be-decoded descriptor or a difference between a number of the reference descriptor and a number of the to-be-decoded descriptor may be further obtained, and the at least one reference descriptor corresponding to the to-be-decoded descriptor is obtained based on the number of the at least one reference descriptor corresponding to the to-be-decoded descriptor or the difference between the number of the reference descriptor and the number of the to-be-decoded descriptor.

S203. Obtain a first compact representation of the to-be-decoded descriptor based on the second compact representation of the to-be-decoded descriptor and the compact representation of the at least one reference descriptor corresponding to the to-be-decoded descriptor.

The second compact representation of the to-be-decoded descriptor is demapped to the first compact representation of the to-be-decoded descriptor. The first compact representation of the to-be-decoded descriptor herein is the first compact representation of the to-be-encoded descriptor in the embodiment in FIG. 5.

S204. Obtain reconstructed data of the at least one 3D map point based on the first compact representation of the to-be-decoded descriptor.

The reconstructed data of the at least one 3D map point is obtained based on the first compact representation of the to-be-decoded descriptor. The reconstructed data of the at least one 3D map point may be used for positioning based on the 3D map. For example, if the first compact representation is one or more quantization indexes, dequantization processing may be performed on the one or more quantization indexes to obtain the reconstructed data of the 3D map point.

In this embodiment, the bitstream of the 3D map is decapsulated to obtain the second compact representation of the to-be-decoded descriptor, the first compact representation of the to-be-decoded descriptor is obtained based on the second compact representation of the to-be-decoded descriptor and the compact representation of the at least one reference descriptor corresponding to the to-be-decoded descriptor, and the reconstructed data of the at least one 3D map point is obtained based on the first compact representation of the to-be-decoded descriptor. An encoder first performs compaction processing to reduce a data volume of the to-be-encoded descriptor, and then maps the first compact representation to the second compact representation, so that data distribution of the compact representation is changed, thereby further reducing a data volume of the bitstream of the 3D map that is obtained through encapsulation, and reducing resource overheads required for transmitting the bitstream of the 3D map. A decoder may demap the second compact representation obtained through decapsulation to obtain the first compact representation and further obtain the reconstructed data of the 3D map point.

In the foregoing embodiment, the first compact representation may be mapped to the second compact representation in different manners.

### Manner 1: Mapping by using a first table (also referred to as mapping by using a static table)

The second compact representation of the to-be-encoded descriptor is obtained by looking up the first table based on the first compact representation of the to-be-encoded descriptor and the compact representation of the at least one reference descriptor. The first table may be preset.

### Manner 2: Mapping by using a second table (also referred to as mapping by using a dynamic table)

The second compact representation of the to-be-encoded descriptor is obtained by looking up the second table based on the first compact representation of the to-be-encoded descriptor. The second table is established based on the compact representation of the at least one reference descriptor.

### Manner 3: Difference or exclusive OR

An exclusive OR value or a difference of the compact representation of the at least one reference descriptor and the first compact representation of the to-be-encoded descriptor is used as the second compact representation of the to-be-encoded descriptor.

The following uses several specific encoding and decoding embodiments to explain and describe the foregoing manner 1, manner 2, and manner 3 in detail.

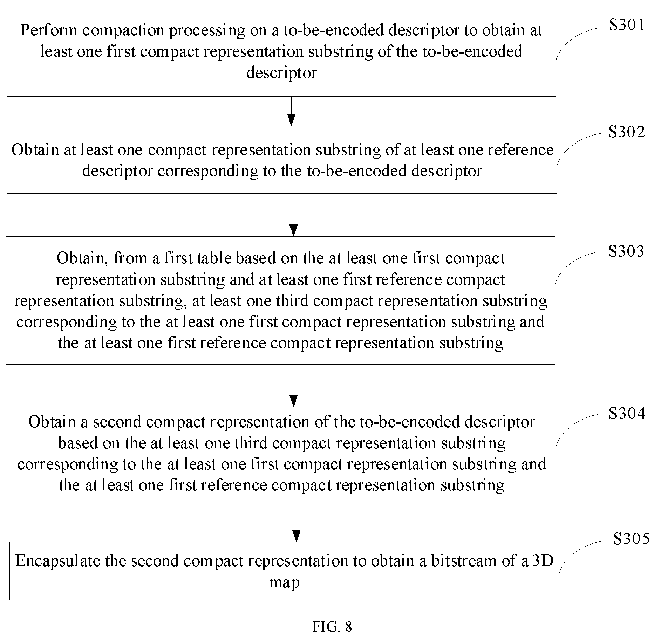

FIG. 8 is a schematic flowchart of a 3D map compression method according to an embodiment of this application. In some implementations, the method may be applied to the electronic device shown in any one of FIG. 1 to FIG. 4f, or may be applied to the server shown in any one of FIG. 1 to FIG. 4f. In the 3D map compression method in this embodiment, the foregoing manner 1 is used to map a first compact representation to a second compact representation. This embodiment is described by using an example in which the first compact representation includes at least one first compact representation substring and the second compact representation includes at least one second compact representation substring. This method includes but is not limited to the following steps.

S301. Perform compaction processing on a to-be-encoded descriptor to obtain a first compact representation of the to-be-encoded descriptor. The first compact representation includes at least one first compact representation substring.

S302. Obtain a compact representation of at least one reference descriptor corresponding to the to-be-encoded descriptor. The compact representation of the at least one reference descriptor includes at least one first reference compact representation substring of each of the at least one reference descriptor.

For related explanations and descriptions of S301 and S302, refer to detailed explanations and descriptions of S101 and S102 in the embodiment shown in FIG. 5. Details are not described herein again.

S303. Obtain, from a first table based on the at least one first compact representation substring and at least one first reference compact representation substring, at least one third compact representation substring corresponding to the at least one first compact representation substring and the at least one first reference compact representation substring.

In this embodiment, the first table may include at least one third compact representation substring corresponding to at least one encoded compact representation substring and at least one second reference compact representation substring.

The at least one encoded compact representation substring in the first table includes the at least one first compact representation substring of the to-be-encoded descriptor, and the at least one second reference compact representation substring in the first table includes at least one first reference compact representation substring of the at least one reference descriptor. Therefore, the at least one corresponding third compact representation substring can be obtained from the first table based on the at least one first compact representation substring and the at least one first reference compact representation substring.

The first table may have a plurality of different forms. In an example, the first table may be a multidimensional array, for example, a two-dimensional array or a three-dimensional array.

Assuming that the first table is a two-dimensional array, T[i] [j] represents a third compact representation substring corresponding to an encoded compact representation substring i and a second reference compact representation substring j, where i is 0 to N-1, j is 0 to M-1, N and M are positive integers greater than 1, N represents a total quantity of encoded compact representation substrings, and M represents a total quantity of second reference compact representation substrings. One first compact representation substring is used as an example. When the first table is used to map the first compact representation substring, the first compact representation substring may be used to find a substring x that is the same as the first compact representation substring among the N encoded compact representation substrings, where x ∈ [0, N-1 ]; and a first reference compact representation substring corresponding to the first compact representation substring is used to find a substring y that is the same as the first reference compact representation substring among the M second reference compact representation substrings, where y ∈ [0, M-1 ]. In this case, T[x][y] is a corresponding third compact representation substring.

T[i] [j] may be obtained through mapping by using a function. The function may be a function about the encoded compact representation substrings i and the reference compact representation substring j. In an example, the function may be a random function. Certainly, it may be understood that the function may alternatively be another function. A specific form of the function is not specifically limited in this embodiment of this application.

In some embodiments, T[i] [j] is less than or equal to the encoded compact representation substring i, or greater than or equal to the encoded compact representation substring i.

If T[i] [j] in the first table is less than or equal to the encoded compact representation substring i, a third compact representation substring obtained by using the first table is less than or equal to the first compact representation substring.

If T[i][j] in the first table is greater than or equal to the encoded compact representation substring i, a third compact representation substring obtained by using the first table is greater than or equal to the first compact representation substring.

Assuming that the first table is a three-dimensional array, in an example, T[i][j][1], T[i][j][2], ..., T[i][j][K] represent K third compact representation substrings corresponding to an encoded compact representation substring i and a reference compact representation substring j, where i is 0 to N-1, j is 0 to M-1, N, M, and K are positive integers greater than 1, N represents a total quantity of encoded compact representation substrings, and M represents a total quantity of reference compact representation substrings. One first compact representation substring is used as an example. When the first table is used to map the first compact representation substring, the first compact representation substring may be used to find a substring x that is the same as the first compact representation substring among the N encoded compact representation substrings, where x ∈ [0, N-1 ]; and a compact representation substring corresponding to the first compact representation substring is used to find a substring y that is the same as the compact representation substring among the M reference compact representation substrings, where y ∈ [0, M-1 ]. In this case, T[x][y][1], T[x][y][2], ..., T[x][y][K] are a plurality of corresponding third compact representation substrings.

T[i] [j] [1], T[i] [j] [2], ..., T[i] [j] [K] may be obtained through mapping by using a function. The function may be a function about the encoded compact representation substrings i and the reference compact representation substring j. In an example, the function may be a random function. Certainly, it may be understood that the function may alternatively be another function. A specific form of the function is not specifically limited in this embodiment of this application.

In another example, T[i][j₁][j₂] represents a third compact representation substring corresponding to the encoded compact representation substring i, a second reference compact representation substring j₁, and a second reference compact representation substring j₂, where i is 0 to N-1, j₁ and j₂ are respectively 0 to M-1, N and M are positive integers greater than 1, N represents a total quantity of encoded compact representation substrings, and M represents a total quantity of second reference compact representation substrings. One first compact representation substring is used as an example. When the first table is used to map the first compact representation substring, the first compact representation substring may be used to find a substring x that is the same as the first compact representation substring among the N encoded compact representation substrings, where x ∈ [0, N-1 ]; one second reference compact representation substring j₁ corresponding to the first compact representation substring is used to find a substring y that is the same as the second reference compact representation substring j₁ among the M second reference compact representation substrings, where y ∈ [0, M-1 ]; and another second reference compact representation substring j₂ corresponding to the first compact representation substring is used to find a substring z that is the same as the second reference compact representation substring j₂ among the M second reference compact representation substrings, where z ∈ [0, M-1 ]. In this case, T[x][y][z] is a corresponding third compact representation substring.

T[x][y][z] may be obtained through mapping by using a function. The function may be a function about the encoded compact representation substring i, the second reference compact representation substring j₁, and the second reference compact representation substring j₂. In an example, the function may be a random function. Certainly, it may be understood that the function may alternatively be another function. A specific form of the function is not specifically limited in this embodiment of this application.

S304. Obtain a second compact representation of the to-be-encoded descriptor based on the at least one third compact representation substring corresponding to the at least one first compact representation substring and the at least one first reference compact representation substring.

In a possible implementation, one first compact representation substring and one first reference compact representation substring correspond to one third compact representation substring. Each of the at least one corresponding third compact representation substring is used as one second compact representation substring, and the obtained at least one second compact representation substring is the second compact representation of the to-be-encoded descriptor. Because T[i] [j] in the first table is less than or equal to the encoded compact representation substring i, the second compact representation substring obtained by mapping the first compact representation substring by using the first table is less than or equal to the first compact representation substring. Therefore, through mapping by using the first table, the first compact representation substring can be mapped toward a first direction, where the first direction may be a direction with a small value (for example, a left direction of a horizontal axis as shown in FIG. 6). Therefore, there is a higher probability that the second compact representation substring is a small value, data distribution of the second compact representation is more centralized, and a data volume of a bitstream of a 3D map obtained through entropy encoding is reduced. Alternatively, because T[i] [j] in the first table is greater than or equal to the encoded compact representation substring i, the second compact representation substring obtained by mapping the first compact representation substring by using the first table is greater than or equal to the first compact representation substring. Therefore, through mapping by using the first table, the first compact representation substring can be mapped toward a second direction, where the second direction may be a direction with a large value (for example, a right direction of a horizontal axis as shown in FIG. 6). Therefore, there is a higher probability that the second compact representation substring is a large value, data distribution of the second compact representation is more centralized, and a data volume of a bitstream of a 3D map obtained through entropy encoding is reduced.

In another possible implementation, one first compact representation substring and one first reference compact representation substring correspond to a plurality of third compact representation substrings. One second compact representation substring is obtained based on the plurality of corresponding third compact representation substrings. At least one second compact representation substring obtained in this manner is the second compact representation of the to-be-encoded descriptor. For example, a plurality of third compact representation substrings corresponding to one first compact representation substring and one first reference compact representation substring are T[i][j][1], T[i][j][2], ..., T[i][j][K]. In this case, one second compact representation substring may be obtained based on T[i][j][1], T[i][j][2], ..., T[i][j][K]. For example, T[i][j][1], T[i][j][2], ..., T[i][j][K] may be averaged, and an average value is used as one second compact representation substring. Certainly, it may be understood that one second compact representation substring may be obtained in another manner based on the plurality of third compact representation substrings. Examples are not described one by one in this embodiment of this application. Because the second compact representation substring obtained by using the first table is less than or equal to the encoded compact representation substring i, the second compact representation substring obtained by mapping the first compact representation substring by using the first table is less than or equal to the first compact representation substring. Therefore, through mapping by using the first table, the first compact representation substring can be mapped toward a first direction, where the first direction may be a direction with a small value (for example, a left direction of a horizontal axis as shown in FIG. 6). Therefore, there is a higher probability that the second compact representation substring is a small value, data distribution of the second compact representation is more centralized, and a data volume of a bitstream of a 3D map obtained through entropy encoding is reduced. Alternatively, because the second compact representation substring obtained by using the first table is greater than or equal to the encoded compact representation substring i, the second compact representation substring obtained by mapping the first compact representation substring by using the first table is greater than or equal to the first compact representation substring. Therefore, through mapping by using the first table, the first compact representation substring can be mapped toward a second direction, where the second direction may be a direction with a large value (for example, a right direction of a horizontal axis as shown in FIG. 6). Therefore, there is a higher probability that the second compact representation substring is a large value, data distribution of the second compact representation is more centralized, and a data volume of a bitstream of a 3D map obtained through entropy encoding is reduced.

In this embodiment of this application, a sequence of the at least one first compact representation substring is different from a sequence of the at least one second compact representation substring.

S305. Encapsulate the second compact representation to obtain the bitstream of the 3D map.

For related explanations and descriptions of S305, refer to detailed explanations and descriptions of S104 in the embodiment shown in FIG. 5. Details are not described herein again.

In this embodiment, compaction processing is performed on the to-be-encoded descriptor to obtain the at least one first compact representation substring of the to-be-encoded descriptor, the at least one third compact representation substring corresponding to the at least one first compact representation substring and the at least one first reference compact representation substring is obtained from the first table based on the at least one first compact representation substring and the at least one first reference compact representation substring, the second compact representation of the to-be-encoded descriptor is obtained based on the at least one third compact representation substring corresponding to the at least one first compact representation substring and the at least one first reference compact representation substring, and the second compact representation is encapsulated to obtain the bitstream of the 3D map. Compaction processing is first performed to reduce a data volume of the to-be-encoded descriptor, and then the first compact representation is mapped to the second compact representation by using the first table, so that the data distribution of the compact representation is changed, thereby further reducing the data volume of the bitstream of the 3D map that is obtained through encapsulation, and reducing resource overheads required for transmitting the bitstream of the 3D map.

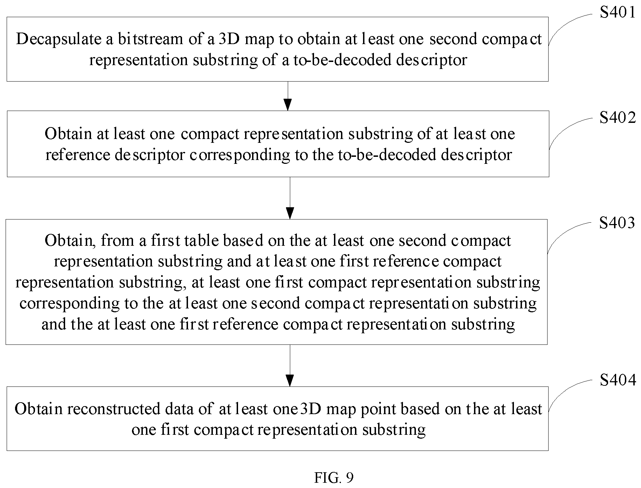

FIG. 9 is a schematic flowchart of a 3D map decompression method according to an embodiment of this application. In some implementations, the method may be applied to the electronic device shown in any one of FIG. 1 to FIG. 4f, or may be applied to the server shown in any one of FIG. 1 to FIG. 4f. In the 3D map decompression method in this embodiment, a second compact representation is demapped to a first compact representation by using a first table. This embodiment is described by using an example in which the first compact representation includes at least one first compact representation substring and the second compact representation includes at least one second compact representation substring. This method includes but is not limited to the following steps.

S401. Decapsulate a bitstream of a 3D map to obtain a second compact representation of a to-be-decoded descriptor. The second compact representation includes at least one second compact representation substring.

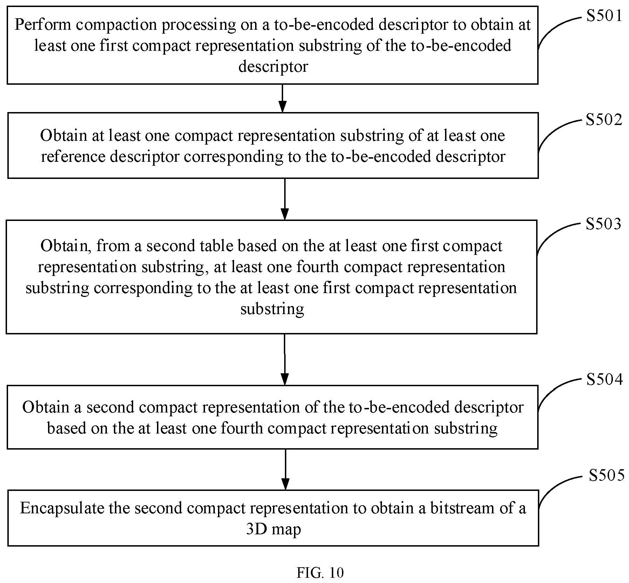

The bitstream of the 3D map may be a bitstream of a 3D map that is obtained according to the embodiment shown in FIG. 8, or may be a bitstream of a 3D map that is obtained according to the embodiment shown in FIG. 10. The compression method and the decompression method in embodiments of this application may be flexibly combined.

S402. Obtain a compact representation of at least one reference descriptor corresponding to the to-be-decoded descriptor. The compact representation of the at least one reference descriptor includes at least one first reference compact representation substring of each of the at least one reference descriptor.

For related explanations and descriptions of S401 and S402, refer to detailed explanations and descriptions of S201 and S202 in the embodiment shown in FIG. 7. Details are not described herein again.

S403. Obtain, from a first table based on the at least one second compact representation substring and at least one first reference compact representation substring, at least one first compact representation substring corresponding to the at least one second compact representation substring and the at least one first reference compact representation substring.

The first table in this embodiment may be a table the same as the first table in the embodiment shown in FIG. 8, or may be a table different from the first table in the embodiment shown in FIG. 8. For example, the first table may be a demapping table corresponding to the first table in the embodiment shown in FIG. 8. In this embodiment, a compact representation before mapping may be obtained by using the first table, and further, reconstructed data of a 3D map point is obtained.

Assuming that the first table is a two-dimensional array, T[i] [j] represents a third compact representation substring corresponding to an encoded compact representation substring i and a second reference compact representation substring j, and the third compact representation substring is used as one second compact representation substring. Assuming i' = T[i][j], where i' represents a second compact representation substring, the demapping table in this embodiment may be represented as T'[i'][j], that is, a compact representation substring before mapping is obtained by using the demapping table, where i = T'[i'] [j].

S404. Obtain reconstructed data of at least one 3D map point based on the at least one first compact representation substring.

For related explanations and descriptions of S404, refer to detailed explanations and descriptions of S204 in the embodiment shown in FIG. 7. Details are not described herein again.

In this embodiment, the bitstream of the 3D map is decapsulated to obtain the at least one second compact representation substring of the to-be-decoded descriptor, the at least one first compact representation substring of the to-be-decoded descriptor is obtained from the first table based on the at least one second compact representation substring of the to-be-decoded descriptor and the at least one first reference compact representation substring of the at least one reference descriptor, and the reconstructed data of the at least one 3D map point is obtained based on the at least one first compact representation substring of the to-be-decoded descriptor. An encoder first performs compaction processing to reduce a data volume of a to-be-encoded descriptor, and then maps a first compact representation to the second compact representation, so that data distribution of the compact representation is changed, thereby further reducing a data volume of the bitstream of the 3D map that is obtained through encapsulation, and reducing resource overheads required for transmitting the bitstream of the 3D map. A decoder may demap the second compact representation obtained through decapsulation by using the first table, to obtain the first compact representation and further obtain the reconstructed data of the 3D map point.

FIG. 10 is a schematic flowchart of a 3D map compression method according to an embodiment of this application. In some implementations, the method may be applied to the electronic device shown in any one of FIG. 1 to FIG. 4f, or may be applied to the server shown in any one of FIG. 1 to FIG. 4f. In the 3D map compression method in this embodiment, the foregoing manner 2 is used to map a first compact representation to a second compact representation. This embodiment is described by using an example in which the first compact representation includes at least one first compact representation substring and the second compact representation includes at least one second compact representation substring. This method includes but is not limited to the following steps.

S501. Perform compaction processing on a to-be-encoded descriptor to obtain a first compact representation of the to-be-encoded descriptor. The first compact representation includes at least one first compact representation substring.

S502. Obtain a compact representation of at least one reference descriptor corresponding to the to-be-encoded descriptor. The compact representation of the at least one reference descriptor includes at least one first reference compact representation substring of each of the at least one reference descriptor.

For related explanations and descriptions of S501 and S502, refer to detailed explanations and descriptions of S101 and S 102 in the embodiment shown in FIG. 5. Details are not described herein again.

S503. Obtain, from a second table based on the at least one first compact representation substring, at least one fourth compact representation substring corresponding to the at least one first compact representation substring.

The second table is established based on the compact representation of the at least one reference descriptor corresponding to the to-be-encoded descriptor.

One first reference compact representation substring is used as an example. The second table in this embodiment may include the first reference compact representation substring and the at least one fourth compact representation substring corresponding to the at least one first compact representation substring. In other words, there is one second table based on one first reference compact representation substring. A plurality of second tables may be established based on a plurality of first reference compact representation substrings.

The second table may have a plurality of different forms. In an example, the second table may be a one-dimensional array or a multidimensional array. The multidimensional array may be, for example, a two-dimensional array or a three-dimensional array.

Assuming that the second table is a one-dimensional array, T[k] represents a fourth compact representation substring corresponding to a first compact representation substring k, where k is 0 to N-1, N is a quantity of first compact representation substrings, N is a positive integer greater than 1, and k is the first compact representation substring k.

T[k] may be obtained through mapping by using a function. In an example, the function may be a random function. Certainly, it may be understood that the function may alternatively be another function. A specific form of the function is not specifically limited in this embodiment of this application.

T[k] is less than or equal to the first compact representation substring k, or greater than or equal to the first compact representation substring k.

If T[k] in the second table is less than or equal to the first compact representation substring k, a fourth compact representation substring obtained by using the second table is less than or equal to the first compact representation substring.

If T[k] in the first table is greater than or equal to the first compact representation substring k, a fourth compact representation substring obtained by using the second table is greater than or equal to the first compact representation substring.

S504. Obtain a second compact representation of the to-be-encoded descriptor based on the at least one fourth compact representation substring.

In a possible implementation, one first compact representation substring corresponds to one fourth compact representation substring. Each of the at least one corresponding fourth compact representation substring is used as one second compact representation substring, and the obtained at least one second compact representation substring is the second compact representation of the to-be-encoded descriptor. Because T[k] in the second table is less than or equal to the first compact representation substring k, the second compact representation substring obtained by mapping the first compact representation substring by using the second table is less than or equal to the first compact representation substring. Therefore, through mapping by using the second table, the first compact representation substring can be mapped toward a first direction, where the first direction may be a direction with a small value (for example, a left direction of a horizontal axis as shown in FIG. 6). Therefore, there is a higher probability that the second compact representation substring is a small value, data distribution of the second compact representation is more centralized, and a data volume of a bitstream of a 3D map obtained through entropy encoding is reduced. Alternatively, because T[k] in the second table is greater than or equal to the first compact representation substring k, the second compact representation substring obtained by mapping the first compact representation substring by using the second table is greater than or equal to the first compact representation substring. Therefore, through mapping by using the second table, the first compact representation substring can be mapped toward a second direction, where the second direction may be a direction with a large value (for example, a right direction of a horizontal axis as shown in FIG. 6). Therefore, there is a higher probability that the second compact representation substring is a large value, data distribution of the second compact representation is more centralized, and a data volume of a bitstream of a 3D map obtained through entropy encoding is reduced.

In this embodiment of this application, a sequence of the at least one first compact representation substring is different from a sequence of the at least one second compact representation substring.

S505. Encapsulate the second compact representation to obtain the bitstream of the 3D map.

For related explanations and descriptions of S505, refer to detailed explanations and descriptions of S 104 in the embodiment shown in FIG. 5. Details are not described herein again.

In this embodiment, compaction processing is performed on the to-be-encoded descriptor to obtain the at least one first compact representation substring of the to-be-encoded descriptor, and the at least one fourth compact representation substring corresponding to the at least one first compact representation substring is obtained from the second table based on the at least one first compact representation substring. The second table is established based on at least one first reference compact representation substring of the at least one reference descriptor. The second compact representation of the to-be-encoded descriptor is obtained based on the at least one fourth compact representation substring, and the second compact representation is encapsulated to obtain the bitstream of the 3D map. Compaction processing is first performed to reduce a data volume of the to-be-encoded descriptor, and then the first compact representation is mapped to the second compact representation by using the second table, so that the data distribution of the compact representation is changed, thereby further reducing the data volume of the bitstream of the 3D map that is obtained through encapsulation, and reducing resource overheads required for transmitting the bitstream of the 3D map.

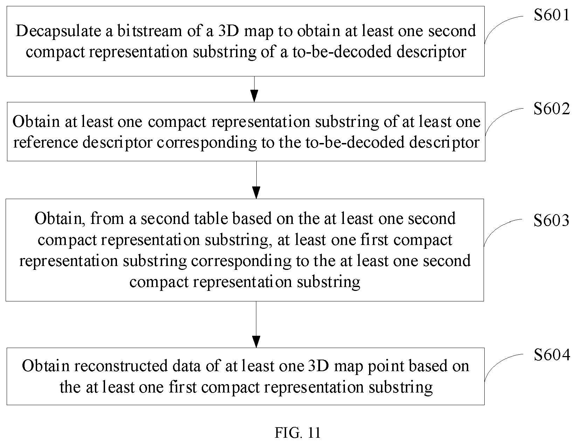

FIG. 11 is a schematic flowchart of a 3D map decompression method according to an embodiment of this application. In some implementations, the method may be applied to the electronic device shown in any one of FIG. 1 to FIG. 4f, or may be applied to the server shown in any one of FIG. 1 to FIG. 4f. In the 3D map decompression method in this embodiment, a second compact representation is demapped to a first compact representation by using a second table. This embodiment is described by using an example in which the first compact representation includes at least one first compact representation substring and the second compact representation includes at least one second compact representation substring. This method includes but is not limited to the following steps.

S601. Decapsulate a bitstream of a 3D map to obtain a second compact representation of a to-be-decoded descriptor. The second compact representation includes at least one second compact representation substring.

The bitstream of the 3D map may be a bitstream of a 3D map that is obtained according to the embodiment shown in FIG. 8, or may be a bitstream of a 3D map that is obtained according to the embodiment shown in FIG. 10. The compression method and the decompression method in embodiments of this application may be flexibly combined.

S602. Obtain a compact representation of at least one reference descriptor corresponding to the to-be-decoded descriptor. The compact representation of the at least one reference descriptor includes at least one first reference compact representation substring of each of the at least one reference descriptor.

For related explanations and descriptions of S601 and S602, refer to detailed explanations and descriptions of S201 and S202 in the embodiment shown in FIG. 7. Details are not described herein again.

S603. Obtain, from a second table based on the at least one second compact representation substring, at least one first compact representation substring corresponding to the at least one second compact representation substring.

The second table is established based on at least one first reference compact representation substring of one or more reference descriptors.

The second table in this embodiment may be a demapping table corresponding to the second table in the embodiment shown in FIG. 10. In this embodiment, a compact representation before mapping may be obtained by using the second table, and further, reconstructed data of a 3D map point is obtained.

Assuming that the second table is a one-dimensional array, T[k] represents a fourth compact representation substring corresponding to a first compact representation substring k, and the fourth compact representation substring is used as one second compact representation substring. Assuming k' = T[k], where k' represents the second compact representation substring, the demapping table in this embodiment may be represented as T'[k'], that is, a compact representation substring before mapping is obtained by using the demapping table, where k = T'[k'], and T'[k'] is obtained based on a compact representation substring j of the reference descriptor.

S604. Obtain reconstructed data of at least one 3D map point based on the at least one first compact representation substring.

For related explanations and descriptions of S604, refer to detailed explanations and descriptions of S204 in the embodiment shown in FIG. 7. Details are not described herein again.

In this embodiment, the bitstream of the 3D map is decapsulated to obtain the at least one second compact representation substring of the to-be-decoded descriptor, the at least one first compact representation substring of the to-be-decoded descriptor is obtained from the second table based on the at least one second compact representation substring of the to-be-decoded descriptor, and the reconstructed data of the at least one 3D map point is obtained based on the at least one first compact representation substring of the to-be-decoded descriptor. The second table is established based on at least one first reference compact representation substring of the at least one reference descriptor. An encoder first performs compaction processing to reduce a data volume of a to-be-encoded descriptor, and then maps a first compact representation to the second compact representation, so that data distribution of the compact representation is changed, thereby further reducing a data volume of the bitstream of the 3D map that is obtained through encapsulation, and reducing resource overheads required for transmitting the bitstream of the 3D map. A decoder may demap the second compact representation obtained through decapsulation by using the second table, to obtain the first compact representation and further obtain the reconstructed data of the 3D map point.

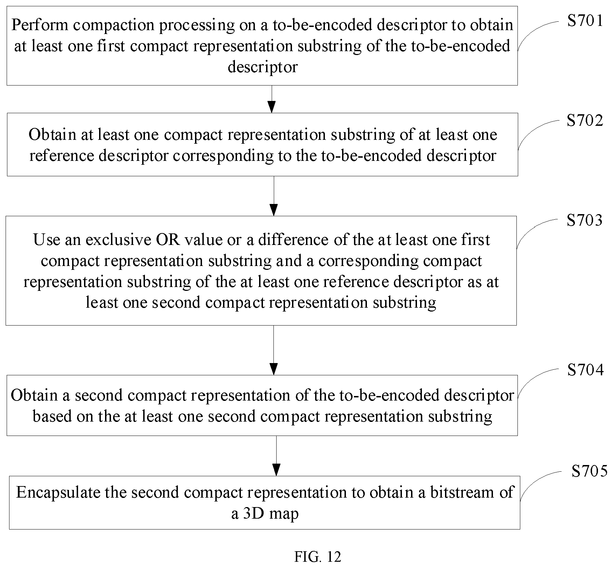

FIG. 12 is a schematic flowchart of a 3D map compression method according to an embodiment of this application. In some implementations, the method may be applied to the electronic device shown in any one of FIG. 1 to FIG. 4f, or may be applied to the server shown in any one of FIG. 1 to FIG. 4f. In the 3D map compression method in this embodiment, the foregoing manner 3 is used to map a first compact representation to a second compact representation. This embodiment is described by using an example in which the first compact representation includes at least one first compact representation substring and the second compact representation includes at least one second compact representation substring. This method includes but is not limited to the following steps.

S701. Perform compaction processing on a to-be-encoded descriptor to obtain a first compact representation of the to-be-encoded descriptor. The first compact representation includes at least one first compact representation substring.

S702. Obtain a compact representation of at least one reference descriptor corresponding to the to-be-encoded descriptor. The compact representation of the at least one reference descriptor includes at least one first reference compact representation substring of each of the at least one reference descriptor.

For related explanations and descriptions of S701 and S702, refer to detailed explanations and descriptions of S101 and S 102 in the embodiment shown in FIG. 5. Details are not described herein again.

S703. Use an exclusive OR value or a difference of the at least one first compact representation substring and a corresponding compact representation substring of the at least one reference descriptor as at least one second compact representation substring.

Assuming that the at least one first compact representation substring includes N first compact representation substrings, N exclusive OR values or differences are used as N second compact representation substrings. The N exclusive OR values or differences are exclusive OR values or differences of the N first compact representation substrings and corresponding compact representation substrings of the at least one reference descriptor.

S704. Obtain a second compact representation of the to-be-encoded descriptor based on the at least one second compact representation substring.

The second compact representation of the to-be-encoded descriptor is obtained by combining the at least one second compact representation substring.

S705. Encapsulate the second compact representation to obtain a bitstream of a 3D map.

For related explanations and descriptions of S705, refer to detailed explanations and descriptions of S 104 in the embodiment shown in FIG. 5. Details are not described herein again.

In this embodiment, compaction processing is performed on the to-be-encoded descriptor to obtain the at least one first compact representation substring of the to-be-encoded descriptor, the exclusive OR value or the difference of the at least one first compact representation substring and the corresponding compact representation substring of the at least one reference descriptor is used as the at least one second compact representation substring to further obtain the second compact representation of the to-be-encoded descriptor, and the second compact representation is encapsulated to obtain the bitstream of the 3D map. Compaction processing is first performed to reduce a data volume of the to-be-encoded descriptor, and then the first compact representation is mapped to the second compact representation by using the exclusive OR value or the difference, so that data distribution of the compact representation is changed, thereby further reducing a data volume of the bitstream of the 3D map that is obtained through encapsulation, and reducing resource overheads required for transmitting the bitstream of the 3D map.

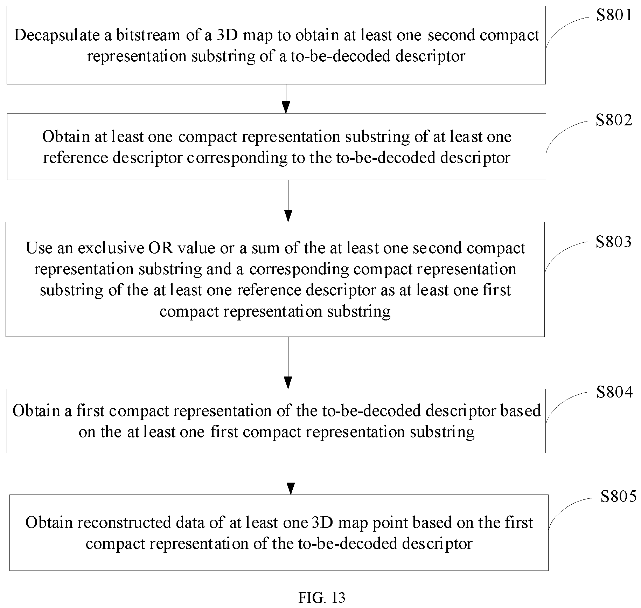

FIG. 13 is a schematic flowchart of a 3D map decompression method according to an embodiment of this application. In some implementations, the method may be applied to the electronic device shown in any one of FIG. 1 to FIG. 4f, or may be applied to the server shown in any one of FIG. 1 to FIG. 4f. In the 3D map decompression method in this embodiment, a second compact representation is demapped to a first compact representation by using an exclusive OR value or a sum. This embodiment is described by using an example in which the first compact representation includes at least one first compact representation substring and the second compact representation includes at least one second compact representation substring. This method includes but is not limited to the following steps.

S801. Decapsulate a bitstream of a 3D map to obtain a second compact representation of a to-be-decoded descriptor. The second compact representation includes at least one second compact representation substring.

The bitstream of the 3D map may be a bitstream of a 3D map that is obtained according to the embodiment shown in FIG. 12.

S802. Obtain a compact representation of at least one reference descriptor corresponding to the to-be-decoded descriptor. The compact representation of the at least one reference descriptor includes at least one first reference compact representation substring of each of the at least one reference descriptor.

For related explanations and descriptions of S801 and S802, refer to detailed explanations and descriptions of S201 and S202 in the embodiment shown in FIG. 7. Details are not described herein again.

S803. Use an exclusive OR value or a sum of the at least one second compact representation substring and a corresponding compact representation substring of the at least one reference descriptor as at least one first compact representation substring.

Assuming that the at least one second compact representation substring includes N second compact representation substrings, N exclusive OR values or sums are used as N first compact representation substrings. The N exclusive OR values or sums are exclusive OR values or sums of the N second compact representation substrings and corresponding compact representation substrings of the at least one reference descriptor.

S804. Obtain a first compact representation of the to-be-decoded descriptor based on the at least one first compact representation substring.

The first compact representation of the to-be-decoded descriptor is obtained by combining the at least one first compact representation substring.

S805. Obtain reconstructed data of at least one 3D map point based on the first compact representation of the to-be-decoded descriptor.

For related explanations and descriptions of S805, refer to detailed explanations and descriptions of S204 in the embodiment shown in FIG. 7. Details are not described herein again.

In this embodiment, the bitstream of the 3D map is decapsulated to obtain the second compact representation of the to-be-decoded descriptor, the first compact representation of the to-be-decoded descriptor is obtained based on the second compact representation of the to-be-decoded descriptor and the compact representation of the at least one reference descriptor corresponding to the to-be-decoded descriptor, and the reconstructed data of the at least one 3D map point is obtained based on the first compact representation of the to-be-decoded descriptor. An encoder first performs compaction processing to reduce a data volume of a to-be-encoded descriptor, and then maps the first compact representation to the second compact representation, so that data distribution of the compact representation is changed, thereby further reducing a data volume of the bitstream of the 3D map that is obtained through encapsulation, and reducing resource overheads required for transmitting the bitstream of the 3D map. A decoder may demap the second compact representation obtained through decapsulation to obtain the first compact representation and further obtain the reconstructed data of the 3D map point.

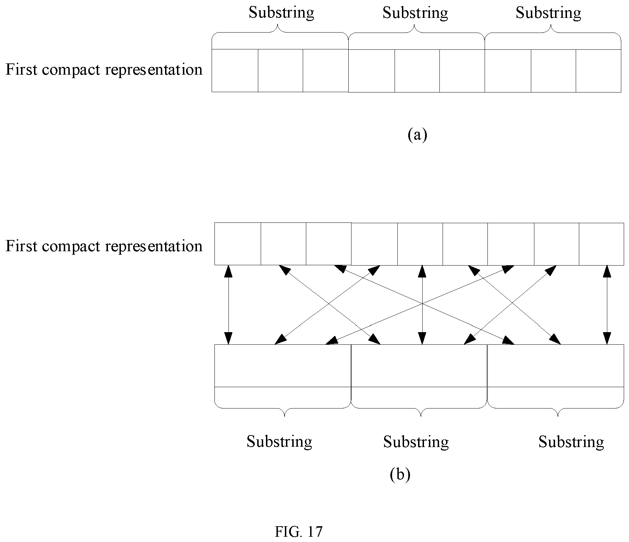

The at least one first compact representation substring of the to-be-encoded descriptor in the foregoing embodiment of this application may be obtained in the following manner: performing compaction processing on the to-be-encoded descriptor to obtain the first compact representation of the to-be-encoded descriptor, and partitioning the first compact representation into one or more first compact representation substrings. The first compact representation may be partitioned in a plurality of manners. For example, the first compact representation includes a plurality of pieces of binary information, and one or more consecutive pieces of binary information are one first compact representation substring, or binary information spaced apart by a preset quantity (for example, 2) is one first compact representation substring. For example, for details, refer to (a) and (b) in FIG. 17. As shown in (a) in FIG. 17, three consecutive pieces of binary information are used as one first compact representation substring, and the first compact representation may be partitioned into three first compact representation substrings. It should be noted that in (a) in FIG. 17, an example in which lengths of the first compact representation substrings are the same is used for description. This is not limited in this embodiment of this application. For example, alternatively, the lengths of the first compact representation substrings may be different. Examples are not described one by one in this embodiment of this application. As shown in (b) in FIG. 17, a first piece of binary information, a fourth piece of binary information, and a seventh piece of binary information in the first compact representation are used as one first compact representation substring, a second piece of binary information, a fifth piece of binary information, and an eighth piece of binary information in the first compact representation are used as one first compact representation substring, and a third piece of binary information, a sixth piece of binary information, and a ninth piece of binary information in the first compact representation are used as one first compact representation substring. It should be noted that in (b) in FIG. 17, spacing apart by two pieces of binary information is used as an example for description. This is not limited in this embodiment of this application. Examples are not described one by one in this embodiment of this application.

In the foregoing embodiment of this application, compaction processing is first performed to reduce a data volume of the to-be-encoded descriptor, and then the first compact representation is mapped to the second compact representation, so that the data distribution of the compact representation is changed, thereby further reducing the data volume of the bitstream of the 3D map that is obtained through encapsulation, and reducing the resource overheads required for transmitting the bitstream of the 3D map. This application further provides the following embodiments to achieve a same technical effect. For detailed explanations and descriptions of the embodiments, refer to the following embodiments.

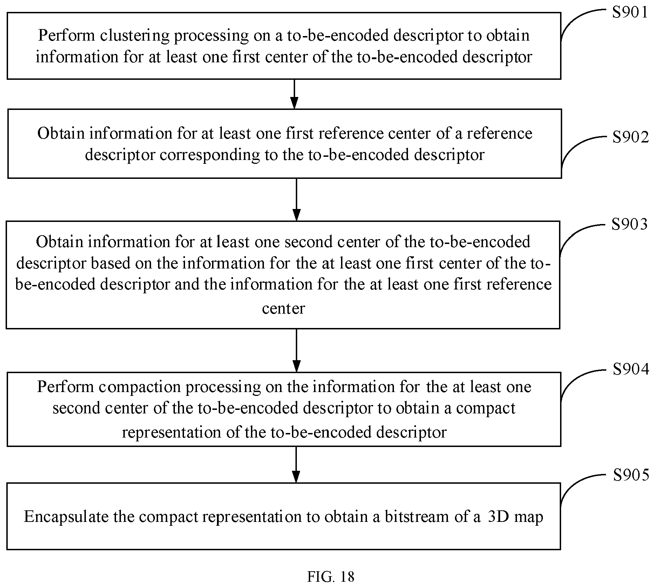

FIG. 18 is a schematic flowchart of a 3D map compression method according to an embodiment of this application. In some implementations, the method may be applied to the electronic device shown in any one of FIG. 1 to FIG. 4f, or may be applied to the server shown in any one of FIG. 1 to FIG. 4f. This method includes but is not limited to the following steps.

S901. Perform clustering processing on a to-be-encoded descriptor to obtain information for at least one first center of the to-be-encoded descriptor.

For detailed explanations and descriptions of the to-be-encoded descriptor, refer to related explanations and descriptions of S 101 in the embodiment shown in FIG. 5. Details are not described herein again.

The information for the at least one first center represents a center obtained after the clustering processing is performed on at least one subfeature of the to-be-encoded descriptor. Any subfeature of the to-be-encoded descriptor may be understood as a point in space including at least one dimension. The center herein may be a geometric center, a centroid, or a center of gravity of one or more points. For one point, the center is the point or a subfeature itself. For a plurality of points, the plurality of points may include a plurality of subfeatures of the to-be-encoded descriptor, or the plurality of points may include one or more subfeatures of the to-be-encoded descriptor and one or more subfeatures of an encoded descriptor. Any piece of first center information may include at least one of a number of a center, a value of at least one dimension of a center, or the like. In other words, the first center information represents a center, and further represents a type of subfeature. Subfeatures of a same type are similar, and subfeatures of different types are different. A sum of distances from the subfeatures of the same type to the center is less than a sum of distances from the subfeatures to another subfeature.

For example, the to-be-encoded descriptor may be partitioned into one or more subfeatures, and clustering processing is performed on each subfeature to obtain one or more pieces of first center information. The one or more pieces of first center information may be numbers of one or more clustering centers.

S902. Obtain information for at least one first reference center of a reference descriptor corresponding to the to-be-encoded descriptor.

The reference descriptor corresponds to at least one encoded 3D map point on a 3D map. For detailed explanations and descriptions of the reference descriptor, refer to related explanations and descriptions of S102 in the embodiment shown in FIG. 5. Details are not described herein again.

The information for the at least one first reference center represents a center obtained after clustering processing is performed on at least one subfeature of the reference descriptor. The information for the at least one first reference center may be a number of at least one reference clustering center.

S903. Obtain information for at least one second center of the to-be-encoded descriptor based on the information for the at least one first center of the to-be-encoded descriptor and the information for the at least one first reference center.

The information for the at least one first center of the to-be-encoded descriptor is mapped to the information for the at least one second center based on the information for the at least one first reference center. An implementation of mapping the information for the at least one first center to the information for the at least one second center may be the same as an implementation of mapping the first compact representation to the second compact representation in the foregoing embodiment. For a specific implementation, refer to detailed explanations and descriptions in the foregoing embodiment. Details are not described herein again.

For example, if the information for the at least one first center is (C1, C2, C3), and the information for the at least one first reference center is (PC1, PC2, PC3), the information for the at least one second center (C1', C2', C3') may be obtained based on (PC1, PC2, PC3) and (C1, C2, C3).

S904. Perform compaction processing on the information for the at least one second center of the to-be-encoded descriptor to obtain a compact representation of the to-be-encoded descriptor.

For detailed explanations and descriptions of the compaction processing, refer to S101 in the embodiment shown in FIG. 5. Details are not described herein again.

For example, compaction processing is performed on the information for the at least one second center (C1', C2', C3') to obtain the compact representation of the to-be-encoded descriptor, and the compact representation may be (D bin 1', D_bin_2', D_bin_3').

S905. Encapsulate the compact representation to obtain a bitstream of the 3D map.

Processing such as entropy encoding may be performed on the compact representation to obtain the bitstream of the 3D map.

In some embodiments, the number of the reference descriptor corresponding to the to-be-encoded descriptor or a difference between the number of the reference descriptor and a number of the to-be-encoded descriptor may be further encapsulated, so that the bitstream of the 3D map further carries the number of the reference descriptor or the difference between numbers. During decompression, the reference descriptor may be obtained based on the number of the reference descriptor or the difference between numbers, and decompression is performed based on the reference descriptor.

In this embodiment, clustering processing is performed on the to-be-encoded descriptor to obtain the information for the at least one first center of the to-be-encoded descriptor, the information for the at least one second center of the to-be-encoded descriptor is obtained based on the information for the at least one first center of the to-be-encoded descriptor and the information for the at least one first reference center, compaction processing is performed on the information for the at least one second center of the to-be-encoded descriptor to obtain the compact representation of the to-be-encoded descriptor, and the compact representation is encapsulated to obtain the bitstream of the 3D map. Clustering processing is first performed, and the first center information is used to represent the original to-be-encoded descriptor, to reduce a data volume of the to-be-encoded descriptor, and then the information for the at least one first center is mapped to the information for the at least one second center, to change data distribution of the center information, thereby further reducing a data volume of the bitstream of the 3D map that is obtained through compaction processing and encapsulation, and reducing resource overheads required for transmitting the bitstream of the 3D map.

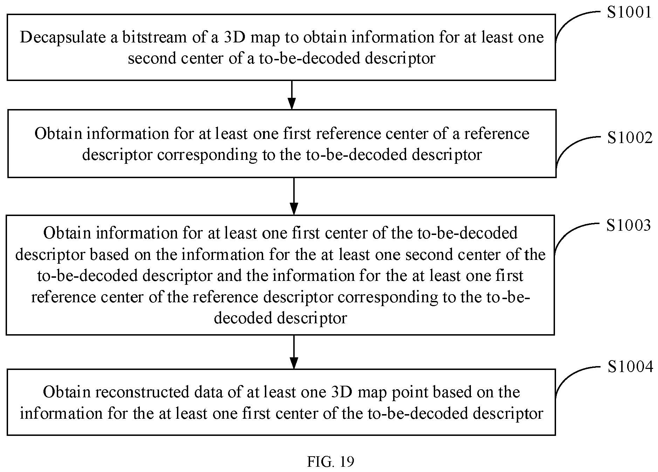

FIG. 19 is a schematic flowchart of a 3D map decompression method according to an embodiment of this application. In some implementations, the method may be applied to the electronic device shown in any one of FIG. 1 to FIG. 4f, or may be applied to the server shown in any one of FIG. 1 to FIG. 4f. This method includes but is not limited to the following steps.

S1001. Decapsulate a bitstream of a 3D map to obtain information for at least one second center of a to-be-decoded descriptor.

For detailed explanations and descriptions of the to-be-decoded descriptor, refer to related explanations and descriptions of S201 in the embodiment shown in FIG. 7. Details are not described herein again.

The information for the at least one second center of the to-be-decoded descriptor in this embodiment is the information for the at least one second center of the to-be-encoded descriptor in the embodiment shown in FIG. 18.

S1002. Obtain information for at least one first reference center of a reference descriptor corresponding to the to-be-decoded descriptor.

The reference descriptor corresponds to at least one decoded 3D map point on the 3D map. For detailed explanations and descriptions of the reference descriptor, refer to related explanations and descriptions of S202 in the embodiment shown in FIG. 7. Details are not described herein again.

The information for the at least one first reference center represents a center obtained after clustering processing is performed on at least one subfeature of the reference descriptor.

S1003. Obtain information for at least one first center of the to-be-decoded descriptor based on the information for the at least one second center of the to-be-decoded descriptor and the information for the at least one first reference center of the reference descriptor corresponding to the to-be-decoded descriptor.

The information for the at least one second center of the to-be-decoded descriptor is demapped to the information for the at least one first center of the to-be-decoded descriptor. The information for the at least one first center of the to-be-decoded descriptor is the information for the at least one first center of the to-be-encoded descriptor in the embodiment shown in FIG. 18.

S1004. Obtain reconstructed data of at least one 3D map point based on the information for the at least one first center of the to-be-decoded descriptor.

The reconstructed data of the at least one 3D map point is obtained based on the information for the at least one first center of the to-be-decoded descriptor. The reconstructed data of the at least one 3D map point may be used for positioning based on the 3D map.

In this embodiment, the bitstream of the 3D map is decapsulated to obtain the information for the at least one second center of the to-be-decoded descriptor, the information for the at least one first center of the to-be-decoded descriptor is obtained based on the information for the at least one second center of the to-be-decoded descriptor and the information for the at least one first reference center of the reference descriptor corresponding to the to-be-decoded descriptor, and the reconstructed data of the at least one 3D map point is obtained based on the information for the at least one first center of the to-be-decoded descriptor. An encoder first performs clustering processing, uses the first center information to represent the original to-be-encoded descriptor, to reduce a data volume of the to-be-encoded descriptor, and then maps the information for the at least one first center to the information for the at least one second center, to change data distribution of the center information, thereby further reducing a data volume of the bitstream of the 3D map that is obtained through compaction processing and encapsulation, and reducing resource overheads required for transmitting the bitstream of the 3D map. A decoder may demap the information for the at least one second center obtained through decapsulation to obtain the information for the at least one first center, and further obtain the reconstructed data of the 3D map point.

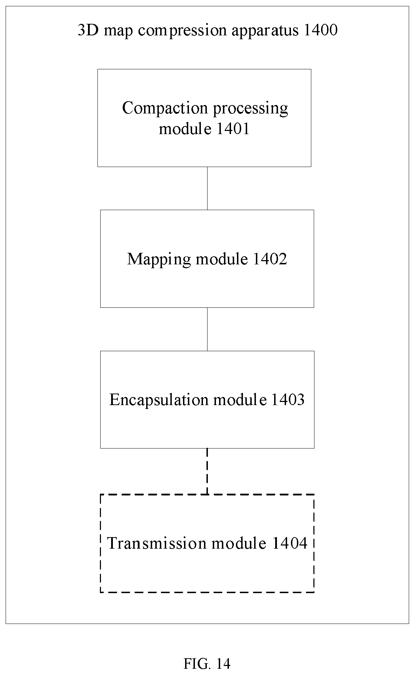

The foregoing describes in detail the 3D map compression method and the 3D map decompression method in embodiments of this application with reference to the accompanying drawings. The following describes a 3D map compression apparatus and a 3D map decompression apparatus in embodiments of this application with reference to FIG. 14 to FIG. 16. It should be understood that the 3D map compression apparatus can perform the 3D map compression method in embodiments of this application, and that the 3D map decompression apparatus can perform the 3D map decompression method in embodiments of this application. To avoid unnecessary repetition, repeated descriptions are properly omitted when the following describes the 3D map compression apparatus and the 3D map decompression apparatus in embodiments of this application.

FIG. 14 is a schematic diagram of a structure of a 3D map compression apparatus according to an embodiment of this application. As shown in FIG. 14, the 3D map compression apparatus 1400 may include a compaction processing module 1401, a mapping module 1402, and an encapsulation module 1403.

The compaction processing module 1401 is configured to perform compaction processing on a to-be-encoded descriptor to obtain a first compact representation of the to-be-encoded descriptor, where the to-be-encoded descriptor corresponds to at least one 3D map point on a 3D map.

The mapping module 1402 is configured to obtain a compact representation of at least one reference descriptor corresponding to the to-be-encoded descriptor, where the at least one reference descriptor corresponds to at least one encoded 3D map point on the 3D map. The mapping module 1402 is further configured to obtain a second compact representation of the to-be-encoded descriptor based on the first compact representation of the to-be-encoded descriptor and the compact representation of the at least one reference descriptor. The encapsulation module 1403 is configured to encapsulate the second compact representation to obtain a bitstream of the 3D map.

In some embodiments, the apparatus may further include a transmission module 1404. The transmission module 1404 is configured to receive 3D map request information sent by an electronic device, and send, to the electronic device in response to the 3D map request information, the bitstream of the 3D map corresponding to the 3D map request information; or the transmission module 1404 is configured to send the bitstream of the 3D map to a server.

In some embodiments, the mapping module 1402 is configured to obtain the second compact representation of the to-be-encoded descriptor by looking up a first table based on the first compact representation of the to-be-encoded descriptor and the compact representation of the at least one reference descriptor.

In some embodiments, the first table includes at least one third compact representation substring corresponding to at least one encoded compact representation substring and at least one second reference compact representation substring, where the first compact representation of the to-be-encoded descriptor includes at least one first compact representation substring of the to-be-encoded descriptor, the at least one encoded compact representation substring includes the at least one first compact representation substring, and the at least one second reference compact representation substring includes at least one first reference compact representation substring of the at least one reference descriptor. The mapping module 1402 is configured to: obtain, from the first table based on the at least one first compact representation substring of the to-be-encoded descriptor and the at least one first reference compact representation substring of the reference descriptor corresponding to the to-be-encoded descriptor, the at least one third compact representation substring corresponding to the at least one first compact representation substring and the at least one first reference compact representation substring; and obtain the second compact representation of the to-be-encoded descriptor based on the at least one third compact representation substring corresponding to the at least one first compact representation substring and the at least one first reference compact representation substring.

In some embodiments, the mapping module 1402 is configured to obtain the second compact representation of the to-be-encoded descriptor by looking up a second table based on the first compact representation of the to-be-encoded descriptor, where the second table is established based on the compact representation of the at least one reference descriptor.

In some embodiments, the first compact representation of the to-be-encoded descriptor includes at least one first compact representation substring of the to-be-encoded descriptor, the compact representation of the at least one reference descriptor includes at least one first reference compact representation substring, and the second table includes the at least one first reference compact representation substring and at least one fourth compact representation substring corresponding to the at least one first compact representation substring. The mapping module 1402 is configured to: obtain, from the second table based on the at least one first compact representation substring of the to-be-encoded descriptor, the at least one fourth compact representation substring corresponding to the at least one first compact representation substring, where the second table is established based on the at least one first reference compact representation substring; and obtain the second compact representation of the to-be-encoded descriptor based on the at least one fourth compact representation substring corresponding to the at least one first compact representation substring.

In some embodiments, the mapping module 1402 is configured to use an exclusive OR value or a difference of the compact representation of the at least one reference descriptor and the first compact representation of the to-be-encoded descriptor as the second compact representation of the to-be-encoded descriptor.

It should be noted that the 3D map compression apparatus 1400 may perform the 3D map compression method in the embodiment shown in FIG. 5, FIG. 8, FIG. 10, or FIG. 12. For a specific implementation principle and technical effect, refer to the detailed description of the foregoing method embodiment. Details are not described herein again.

An embodiment of this application further provides another 3D map compression apparatus. The 3D map compression apparatus may have a same structure as that in FIG. 14.

The mapping module 1402 is configured to perform clustering processing on a to-be-encoded descriptor to obtain information for at least one first center of the to-be-encoded descriptor, where the to-be-encoded descriptor corresponds to at least one 3D map point on a 3D map, and the information for the at least one first center represents a center obtained after the clustering processing is performed on at least one subfeature of the to-be-encoded descriptor. The mapping module 1402 is further configured to: obtain information for at least one first reference center of a reference descriptor corresponding to the to-be-encoded descriptor, where the reference descriptor corresponds to at least one encoded 3D map point on the 3D map, and the information for the at least one first reference center represents a center obtained after clustering processing is performed on at least one subfeature of the reference descriptor; and obtain information for at least one second center of the to-be-encoded descriptor based on the information for the at least one first center of the to-be-encoded descriptor and the information for the at least one first reference center.

The compaction processing module 1401 is configured to perform compaction processing on the information for the at least one second center of the to-be-encoded descriptor to obtain a compact representation of the to-be-encoded descriptor.

The encapsulation module 1403 is configured to encapsulate the compact representation to obtain a bitstream of the 3D map.

In a possible design, the apparatus may further include a transmission module 1404. The transmission module 1404 is configured to receive 3D map request information sent by an electronic device, and send, to the electronic device in response to the 3D map request information, the bitstream of the 3D map corresponding to the 3D map request information; or the transmission module 1404 is configured to send the bitstream of the 3D map to a server.

In a possible design, the mapping module 1402 is specifically configured to obtain the information for the at least one second center of the to-be-encoded descriptor by looking up a first table based on the information for the at least one first center of the to-be-encoded descriptor and the information for the at least one first reference center.

In a possible design, the first table includes information for at least one third center corresponding to information for at least one coding center and information for at least one second reference center, where the information for at least the coding center includes the information for the at least one first center of the to-be-encoded descriptor, and the information for the at least one second reference center includes the information for the at least one first reference center. The mapping module 1402 is specifically configured to: obtain, from the first table based on the information for the at least one first center of the to-be-encoded descriptor and the information for the at least one first reference center, the information for the at least one third center corresponding to the information for the at least one first center and the information for the at least one first reference center; and use the information for the at least one third center as the information for the at least one second center of the to-be-encoded descriptor.

In a possible design, the first table is a multidimensional array, and each element in the multidimensional array corresponds to the information for at least the coding center or the information for the at least one second reference center.

In a possible design, the mapping module 1402 is specifically configured to obtain the information for the at least one second center of the to-be-encoded descriptor by looking up a second table based on the information for the at least one first center of the to-be-encoded descriptor, where the second table is established based on the information for the at least one first reference center.

In a possible design, the second table includes the information for the at least one first reference center and information for at least one fourth center corresponding to the information for the at least one first center of the to-be-encoded descriptor. The mapping module 1402 is specifically configured to: obtain, from the second table based on the information for the at least one first center of the to-be-encoded descriptor, the information for the at least one fourth center corresponding to the information for the at least one first center; and use the information for the at least one fourth center corresponding to the information for the at least one first center as the information for the at least one second center of the to-be-encoded descriptor.

In a possible design, the second table is an array with at least one dimension, and each element in the array with at least one dimension corresponds to the information for the at least one first center.

In a possible design, the mapping module 1402 is specifically configured to use an exclusive OR value or a difference of the information for the at least one first center of the to-be-encoded descriptor and the information for the at least one first reference center as the information for the at least one second center of the to-be-encoded descriptor.

It should be noted that the 3D map compression apparatus may perform the 3D map compression method in the embodiment shown in FIG. 18. For a specific implementation principle and technical effect, refer to the detailed description of the foregoing method embodiment. Details are not described herein again.

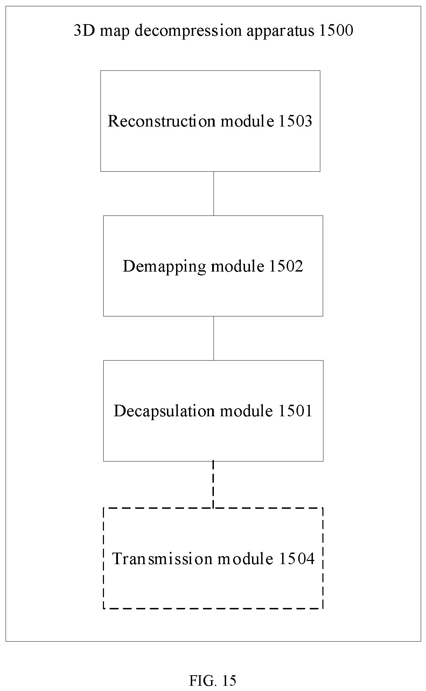

FIG. 15 is a schematic diagram of a structure of a 3D map decompression apparatus according to an embodiment of this application. As shown in FIG. 15, the 3D map decompression apparatus 1500 may include a decapsulation module 1501, a demapping module 1502, and a reconstruction module 1503.

The decapsulation module 1501 is configured to decapsulate a bitstream of a 3D map to obtain a second compact representation of a to-be-decoded descriptor, where the to-be-decoded descriptor corresponds to at least one 3D map point on the 3D map. The demapping module 1502 is configured to obtain a compact representation of at least one reference descriptor corresponding to the to-be-decoded descriptor, where the at least one reference descriptor corresponds to at least one decoded 3D map point on the 3D map. The demapping module 1502 is further configured to obtain a first compact representation of the to-be-decoded descriptor based on the second compact representation of the to-be-decoded descriptor and the compact representation of the at least one reference descriptor corresponding to the to-be-decoded descriptor. The reconstruction module 1503 is configured to obtain reconstructed data of the at least one 3D map point based on the first compact representation of the to-be-decoded descriptor.

In some embodiments, the apparatus may further include a transmission module 1504, configured to send 3D map request information, and receive the bitstream of the 3D map corresponding to the 3D map request information.

In some embodiments, the demapping module 1502 is configured to obtain the first compact representation of the to-be-decoded descriptor by looking up a first table based on the second compact representation of the to-be-decoded descriptor and the compact representation of the at least one reference descriptor corresponding to the to-be-decoded descriptor.

In some embodiments, the demapping module 1502 is configured to obtain the first compact representation of the to-be-decoded descriptor by looking up a second table based on the second compact representation of the to-be-decoded descriptor, where the second table is established based on the compact representation of the at least one reference descriptor corresponding to the to-be-decoded descriptor.

In some embodiments, the demapping module 1502 is configured to use an exclusive OR value or a sum of the compact representation of the at least one reference descriptor and the second compact representation of the to-be-decoded descriptor as the first compact representation of the to-be-decoded descriptor.

It should be noted that the 3D map decompression apparatus 1500 may perform the 3D map decompression method in the embodiment shown in FIG. 7, FIG. 9, FIG. 11, or FIG. 13. For a specific implementation principle and technical effect, refer to the detailed description of the foregoing method embodiment. Details are not described herein again.

An embodiment of this application further provides another 3D map decompression apparatus. The 3D map decompression apparatus may have a same structure as that in FIG. 15.

The decapsulation module 1501 is configured to decapsulate a bitstream of a 3D map to obtain information for at least one second center of a to-be-decoded descriptor, where the to-be-decoded descriptor corresponds to at least one 3D map point on the 3D map.

The demapping module 1502 is configured to: obtain information for at least one first reference center of a reference descriptor corresponding to the to-be-decoded descriptor, where the reference descriptor corresponds to at least one decoded 3D map point on the 3D map, and the information for the at least one first reference center represents a center obtained after clustering processing is performed on at least one subfeature of the reference descriptor; and obtain information for at least one first center of the to-be-decoded descriptor based on the information for the at least one second center of the to-be-decoded descriptor and the information for the at least one first reference center of the reference descriptor corresponding to the to-be-decoded descriptor.

The reconstruction module 1503 is configured to obtain reconstructed data of the at least one 3D map point based on the information for the at least one first center of the to-be-decoded descriptor.

In a possible design, the apparatus may further include a transmission module 1504, configured to send 3D map request information, and receive the bitstream of the 3D map corresponding to the 3D map request information; or configured to receive the bitstream of the 3D map sent by an electronic device.

In a possible design, the demapping module 1502 is specifically configured to obtain the information for the at least one first center of the to-be-decoded descriptor by looking up a first table based on the information for the at least one second center of the to-be-decoded descriptor and the information for the at least one first reference center of the reference descriptor corresponding to the to-be-decoded descriptor.

In a possible design, the demapping module 1502 is specifically configured to obtain the information for the at least one first center of the to-be-decoded descriptor by looking up a second table based on the information for the at least one second center of the to-be-decoded descriptor, where the second table is established based on the information for the at least one first reference center of the reference descriptor corresponding to the to-be-decoded descriptor.

In a possible design, the demapping module 1502 is specifically configured to use an exclusive OR value or a sum of the information for the at least one second center of the to-be-decoded descriptor and the information for the at least one first reference center of the reference descriptor corresponding to the to-be-decoded descriptor as the information for the at least one first center of the to-be-decoded descriptor.

It should be noted that the 3D map decompression apparatus may perform the 3D map decompression method in the embodiment shown in FIG. 19. For a specific implementation principle and technical effect, refer to the detailed description of the foregoing method embodiment. Details are not described herein again.

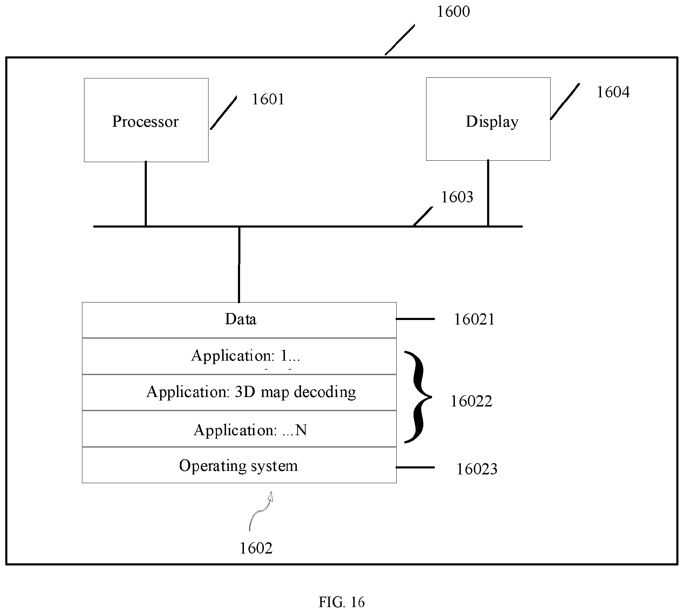

FIG. 16 is a schematic block diagram of a decoding apparatus 1600 according to an embodiment of this application. The acquisition apparatus 1600 may include a processor 1601, a memory 1602, and a bus system 1603. The processor 1601 and the memory 1602 are connected by using the bus system 1603. The memory 1602 is configured to store instructions. The processor 1601 is configured to execute the instructions stored in the memory 1302, to perform various 3D map compression methods or 3D map decompression methods described in this application. To avoid repetition, details are not described herein again.

The processor 1601 in this embodiment of this application may be a central processing unit (central processing unit, CPU). Alternatively, the processor 1601 may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

The memory 1602 may include a ROM device or a RAM device. Any other appropriate type of storage device may also be used as the memory 1602. The memory 1602 may include code and data 16021 accessed by the processor 1601 by using the bus 1603. The memory 1602 may further include an operating system 16023 and an application program 16022. The application program 16022 includes at least one program that allows the processor 1601 to perform the 3D map compression or decompression method described in this application. For example, the application program 16022 may include applications 1 to N, and further include a 3D map compression or decompression application (referred to as a 3D map decoding application for short) that performs the 3D map compression or decompression method described in this application.

In addition to a data bus, the bus system 1603 may further include a power bus, a control bus, a status signal bus, and the like. However, for clarity of description, various buses are marked as the bus system 1603 in the figure.

Optionally, the decoding apparatus 1600 may further include one or more output devices, such as a display 1604. In an example, the display 1604 may be a touch display, and the touch display combines a display and a touch unit that operably senses a touch input. The display 1604 may be connected to the processor 1601 by using the bus 1603.

It should be noted that the decoding apparatus 1600 may perform the 3D map compression method in this application, or may perform the 3D map decompression method in this application.

The processor mentioned in the foregoing embodiment may be an integrated circuit chip and has a signal processing capability. In an implementation process, the steps of the foregoing method embodiment may be completed by a hardware integrated logic circuit in the processor or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly performed and completed by a hardware encoding processor, or may be performed and completed by a combination of hardware in an encoding processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor.

The memory mentioned in the foregoing embodiment may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), and an electrically erasable programmable read-only memory (electrically EPROM, EEPROM), or a flash memory. The volatile memory may be a random access memory (random access memory, RAM), used as an external cache. Through examples but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the system and the method described in this specification includes but is not limited to these and any other appropriate type of memory.

A person of ordinaᵣy skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected depending on actual requirements, to achieve the objectives of the solutions in the embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or a part contributing to the conventional technology, or some of the technical solutions may be implemented in a form of a software product. The computer software product is stored in a storage medium, and includes several instructions for instructing a computer device (a personal computer, a server, a network device, or the like) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A 3D map compression method, wherein the method comprises:
performing compaction processing on a to-be-encoded descriptor to obtain a first compact representation of the to-be-encoded descriptor, wherein the to-be-encoded descriptor corresponds to at least one 3D map point on a 3D map;
obtaining a compact representation of at least one reference descriptor corresponding to the to-be-encoded descriptor, wherein the at least one reference descriptor corresponds to at least one encoded 3D map point on the 3D map;
obtaining a second compact representation of the to-be-encoded descriptor based on the first compact representation of the to-be-encoded descriptor and the compact representation of the at least one reference descriptor; and
encapsulating the second compact representation to obtain a bitstream of the 3D map.

2. The method according to claim 1, wherein the method further comprises:
receiving 3D map request information sent by an electronic device, and sending, to the electronic device in response to the 3D map request information, the bitstream of the 3D map corresponding to the 3D map request information; or
sending the bitstream of the 3D map to a server.

3. The method according to claim 1 or 2, wherein data distribution of the first compact representation is different from data distribution of the second compact representation.

4. The method according to claim 3, wherein the first compact representation of the to-be-encoded descriptor comprises at least one first compact representation substring of the to-be-encoded descriptor, and the second compact representation of the to-be-encoded descriptor comprises at least one second compact representation substring of the to-be-encoded descriptor, wherein the at least one first compact representation substring is different from the at least one second compact representation substring.

5. The method according to claim 4, wherein the at least one second compact representation substring is partially or all less than or equal to the corresponding first compact representation substring; or the at least one second compact representation substring is partially or all greater than or equal to the corresponding first compact representation substring.

6. The method according to any one of claims 1 to 5, wherein the obtaining a second compact representation of the to-be-encoded descriptor based on the first compact representation of the to-be-encoded descriptor and the compact representation of the at least one reference descriptor comprises:
obtaining the second compact representation of the to-be-encoded descriptor by looking up a first table based on the first compact representation of the to-be-encoded descriptor and the compact representation of the at least one reference descriptor.

7. The method according to claim 6, wherein the first table comprises at least one third compact representation substring corresponding to at least one encoded compact representation substring and at least one second reference compact representation substring, wherein
the at least one encoded compact representation substring comprises the at least one first compact representation substring of the to-be-encoded descriptor, and the at least one second reference compact representation substring comprises at least one first reference compact representation substring of the at least one reference descriptor; and
the obtaining the second compact representation of the to-be-encoded descriptor by looking up a first table based on the first compact representation of the to-be-encoded descriptor and the compact representation of the at least one reference descriptor comprises:
obtaining, from the first table based on the at least one first compact representation substring of the to-be-encoded descriptor and the at least one first reference compact representation substring of the reference descriptor corresponding to the to-be-encoded descriptor, the at least one third compact representation substring corresponding to the at least one first compact representation substring and the at least one first reference compact representation substring; and
obtaining the second compact representation of the to-be-encoded descriptor based on the at least one third compact representation substring corresponding to the at least one first compact representation substring and the at least one first reference compact representation substring.

8. The method according to claim 7, wherein the first table is a multidimensional array, and each element in the multidimensional array corresponds to the at least one encoded compact representation substring or the at least one second reference compact representation substring.

9. The method according to any one of claims 1 to 5, wherein the obtaining a second compact representation of the to-be-encoded descriptor based on the first compact representation of the to-be-encoded descriptor and the compact representation of the at least one reference descriptor comprises:
obtaining the second compact representation of the to-be-encoded descriptor by looking up a second table based on the first compact representation of the to-be-encoded descriptor, wherein the second table is established based on the compact representation of the at least one reference descriptor.

10. The method according to claim 9, wherein the compact representation of the at least one reference descriptor comprises at least one first reference compact representation substring, and the second table comprises the at least one first reference compact representation substring and at least one fourth compact representation substring corresponding to the at least one first compact representation substring of the to-be-encoded descriptor; and
the obtaining the second compact representation of the to-be-encoded descriptor by looking up a second table based on the first compact representation of the to-be-encoded descriptor comprises:
obtaining, from the second table based on the at least one first compact representation substring of the to-be-encoded descriptor, the at least one fourth compact representation substring corresponding to the at least one first compact representation substring, wherein the second table is established based on the at least one first reference compact representation substring; and
obtaining the second compact representation of the to-be-encoded descriptor based on the at least one fourth compact representation substring corresponding to the at least one first compact representation substring.

11. The method according to claim 10, wherein the second table is an array with at least one dimension, and each element in the array with at least one dimension corresponds to the at least one first compact representation substring.

12. The method according to any one of claims 1 to 5, wherein the obtaining a second compact representation of the to-be-encoded descriptor based on the first compact representation of the to-be-encoded descriptor and the compact representation of the at least one reference descriptor comprises:
using an exclusive OR value or a difference of the compact representation of the at least one reference descriptor and the first compact representation of the to-be-encoded descriptor as the second compact representation of the to-be-encoded descriptor.

13. The method according to any one of claims 1 to 12, wherein the to-be-encoded descriptor comprises a zone descriptor or a 3D map point descriptor.

14. The method according to any one of claims 1 to 13, wherein the at least one reference descriptor corresponding to the to-be-encoded descriptor comprises:
at least one compressed descriptor before the to-be-encoded descriptor;
at least one preset descriptor; or
at least one descriptor determined by using a neural network model or through clustering.

15. The method according to any one of claims 1 to 14, wherein the compaction processing comprises quantization processing or binarization processing, and the quantization processing or the binarization processing is used to reduce a quantity of bits of the to-be-encoded descriptor.

16. A 3D map decompression method, wherein the method comprises:
decapsulating a bitstream of a 3D map to obtain a second compact representation of a to-be-decoded descriptor, wherein the to-be-decoded descriptor corresponds to at least one 3D map point on the 3D map;
obtaining a compact representation of at least one reference descriptor corresponding to the to-be-decoded descriptor, wherein the at least one reference descriptor corresponds to at least one decoded 3D map point on the 3D map;
obtaining a first compact representation of the to-be-decoded descriptor based on the second compact representation of the to-be-decoded descriptor and the compact representation of the at least one reference descriptor corresponding to the to-be-decoded descriptor; and
obtaining reconstructed data of the at least one 3D map point based on the first compact representation of the to-be-decoded descriptor.

17. The method according to claim 16, wherein the method further comprises:
sending 3D map request information, and receiving the bitstream of the 3D map corresponding to the 3D map request information.

18. The method according to claim 16 or 17, wherein data distribution of the first compact representation is different from data distribution of the second compact representation.

19. The method according to claim 18, wherein the first compact representation of the to-be-decoded descriptor comprises at least one first compact representation substring of the to-be-decoded descriptor, and the second compact representation of the to-be-decoded descriptor comprises at least one second compact representation substring of the to-be-decoded descriptor, wherein the at least one first compact representation substring is different from the at least one second compact representation substring.

20. The method according to claim 19, wherein the at least one second compact representation substring is partially or all less than or equal to the corresponding first compact representation substring; or the at least one second compact representation substring is partially or all greater than or equal to the corresponding first compact representation substring.

21. The method according to any one of claims 16 to 20, wherein the obtaining a first compact representation of the to-be-decoded descriptor based on the second compact representation of the to-be-decoded descriptor and the compact representation of the at least one reference descriptor corresponding to the to-be-decoded descriptor comprises:
obtaining the first compact representation of the to-be-decoded descriptor by looking up a first table based on the second compact representation of the to-be-decoded descriptor and the compact representation of the at least one reference descriptor corresponding to the to-be-decoded descriptor.

22. The method according to any one of claims 16 to 20, wherein the obtaining a first compact representation of the to-be-decoded descriptor based on the second compact representation of the to-be-decoded descriptor and the compact representation of the at least one reference descriptor corresponding to the to-be-decoded descriptor comprises:
obtaining the first compact representation of the to-be-decoded descriptor by looking up a second table based on the second compact representation of the to-be-decoded descriptor, wherein the second table is established based on the compact representation of the at least one reference descriptor corresponding to the to-be-decoded descriptor.

23. The method according to any one of claims 16 to 20, wherein the obtaining a first compact representation of the to-be-decoded descriptor based on the second compact representation of the to-be-decoded descriptor and the compact representation of the at least one reference descriptor corresponding to the to-be-decoded descriptor comprises:
using an exclusive OR value or a sum of the compact representation of the at least one reference descriptor and the second compact representation of the to-be-decoded descriptor as the first compact representation of the to-be-decoded descriptor.

24. A 3D map compression apparatus, wherein the apparatus comprises:
a compaction processing module, configured to perform compaction processing on a to-be-encoded descriptor to obtain a first compact representation of the to-be-encoded descriptor, wherein the to-be-encoded descriptor corresponds to at least one 3D map point on a 3D map;
a mapping module, configured to obtain a compact representation of at least one reference descriptor corresponding to the to-be-encoded descriptor, wherein the at least one reference descriptor corresponds to at least one encoded 3D map point on the 3D map, wherein
the mapping module is further configured to obtain a second compact representation of the to-be-encoded descriptor based on the first compact representation of the to-be-encoded descriptor and the compact representation of the at least one reference descriptor; and
an encapsulation module, configured to encapsulate the second compact representation to obtain a bitstream of the 3D map.

25. The apparatus according to claim 24, wherein the apparatus further comprises a transmission module, wherein
the transmission module is configured to receive 3D map request information sent by an electronic device, and send, to the electronic device in response to the 3D map request information, the bitstream of the 3D map corresponding to the 3D map request information; or
the transmission module is configured to send the bitstream of the 3D map to a server.

26. The apparatus according to claim 24 or 25, wherein data distribution of the first compact representation is different from data distribution of the second compact representation.

27. The apparatus according to claim 26, wherein the first compact representation of the to-be-encoded descriptor comprises at least one first compact representation substring of the to-be-encoded descriptor, and the second compact representation of the to-be-encoded descriptor comprises at least one second compact representation substring of the to-be-encoded descriptor, wherein the at least one first compact representation substring is different from the at least one second compact representation substring.

28. The apparatus according to claim 27, wherein the at least one second compact representation substring is partially or all less than or equal to the corresponding first compact representation substring; or the at least one second compact representation substring is partially or all greater than or equal to the corresponding first compact representation substring.

29. The apparatus according to any one of claims 24 to 28, wherein the mapping module is configured to obtain the second compact representation of the to-be-encoded descriptor by looking up a first table based on the first compact representation of the to-be-encoded descriptor and the compact representation of the at least one reference descriptor.

30. The apparatus according to claim 29, wherein the first table comprises at least one third compact representation substring corresponding to at least one encoded compact representation substring and at least one second reference compact representation substring, wherein
the at least one encoded compact representation substring comprises the at least one first compact representation substring of the to-be-encoded descriptor, and the at least one second reference compact representation substring comprises at least one first reference compact representation substring of the at least one reference descriptor; and
the mapping module is configured to: obtain, from the first table based on the at least one first compact representation substring of the to-be-encoded descriptor and the at least one first reference compact representation substring of the reference descriptor corresponding to the to-be-encoded descriptor, the at least one third compact representation substring corresponding to the at least one first compact representation substring and the at least one first reference compact representation substring; and obtain the second compact representation of the to-be-encoded descriptor based on the at least one third compact representation substring corresponding to the at least one first compact representation substring and the at least one first reference compact representation substring.

31. The apparatus according to claim 30, wherein the first table is a multidimensional array, and each element in the multidimensional array corresponds to the at least one encoded compact representation substring or the at least one second reference compact representation substring.

32. The apparatus according to any one of claims 24 to 28, wherein the mapping module is configured to obtain the second compact representation of the to-be-encoded descriptor by looking up a second table based on the first compact representation of the to-be-encoded descriptor, wherein the second table is established based on the compact representation of the at least one reference descriptor.

33. The apparatus according to claim 32, wherein the compact representation of the at least one reference descriptor comprises at least one first reference compact representation substring, and the second table comprises the at least one first reference compact representation substring and at least one fourth compact representation substring corresponding to the at least one first compact representation substring of the to-be-encoded descriptor; and
the mapping module is configured to: obtain, from the second table based on the at least one first compact representation substring of the to-be-encoded descriptor, the at least one fourth compact representation substring corresponding to the at least one first compact representation substring, wherein the second table is established based on the at least one first reference compact representation substring; and obtain the second compact representation of the to-be-encoded descriptor based on the at least one fourth compact representation substring corresponding to the at least one first compact representation substring.

34. The apparatus according to claim 33, wherein the second table is an array with at least one dimension, and each element in the array with at least one dimension corresponds to the at least one first compact representation substring.

35. The apparatus according to any one of claims 24 to 28, wherein the mapping module is configured to use an exclusive OR value or a difference of the compact representation of the at least one reference descriptor and the first compact representation of the to-be-encoded descriptor as the second compact representation of the to-be-encoded descriptor.

36. The apparatus according to any one of claims 24 to 35, wherein the to-be-encoded descriptor comprises a zone descriptor or a 3D map point descriptor.

37. The apparatus according to any one of claims 24 to 36, wherein the at least one reference descriptor corresponding to the to-be-encoded descriptor comprises:
at least one compressed descriptor before the to-be-encoded descriptor;
at least one preset descriptor; or
at least one descriptor determined by using a neural network model or through clustering.

38. The apparatus according to any one of claims 24 to 37, wherein the compaction processing comprises quantization processing or binarization processing, and the quantization processing or the binarization processing is used to reduce a quantity of bits of the to-be-encoded descriptor.

39. A 3D map decompression apparatus, wherein the apparatus comprises:
a decapsulation module, configured to decapsulate a bitstream of a 3D map to obtain a second compact representation of a to-be-decoded descriptor, wherein the to-be-decoded descriptor corresponds to at least one 3D map point on the 3D map;
a demapping module, configured to obtain a compact representation of at least one reference descriptor corresponding to the to-be-decoded descriptor, wherein the at least one reference descriptor corresponds to at least one decoded 3D map point on the 3D map, wherein
the demapping module is further configured to obtain a first compact representation of the to-be-decoded descriptor based on the second compact representation of the to-be-decoded descriptor and the compact representation of the at least one reference descriptor corresponding to the to-be-decoded descriptor; and
a reconstruction module, configured to obtain reconstructed data of the at least one 3D map point based on the first compact representation of the to-be-decoded descriptor.

40. The apparatus according to claim 39, wherein the apparatus further comprises:
a transmission module, configured to send 3D map request information, and receive the bitstream of the 3D map corresponding to the 3D map request information.

41. The apparatus according to claim 39 or 40, wherein data distribution of the first compact representation is different from data distribution of the second compact representation.

42. The apparatus according to claim 41, wherein the first compact representation of the to-be-decoded descriptor comprises at least one first compact representation substring of the to-be-decoded descriptor, and the second compact representation of the to-be-decoded descriptor comprises at least one second compact representation substring of the to-be-decoded descriptor, wherein the at least one first compact representation substring is different from the at least one second compact representation substring.

43. The apparatus according to claim 42, wherein the at least one second compact representation substring is partially or all less than or equal to the corresponding first compact representation substring; or the at least one second compact representation substring is partially or all greater than or equal to the corresponding first compact representation substring.

44. The apparatus according to any one of claims 39 to 43, wherein the demapping module is configured to obtain the first compact representation of the to-be-decoded descriptor by looking up a first table based on the second compact representation of the to-be-decoded descriptor and the compact representation of the at least one reference descriptor corresponding to the to-be-decoded descriptor.

45. The apparatus according to any one of claims 39 to 43, wherein the demapping module is configured to obtain the first compact representation of the to-be-decoded descriptor by looking up a second table based on the second compact representation of the to-be-decoded descriptor, wherein the second table is established based on the compact representation of the at least one reference descriptor corresponding to the to-be-decoded descriptor.

46. The apparatus according to any one of claims 39 to 43, wherein the demapping module is configured to use an exclusive OR value or a sum of the compact representation of the at least one reference descriptor and the second compact representation of the to-be-decoded descriptor as the first compact representation of the to-be-decoded descriptor.

47. A 3D map compression method, wherein the method comprises:
performing clustering processing on a to-be-encoded descriptor to obtain information for at least a first center of the to-be-encoded descriptor, wherein the to-be-encoded descriptor corresponds to at least one 3D map point on a 3D map, and the information for the at least one first center represents a center obtained after the clustering processing is performed on at least one subfeature of the to-be-encoded descriptor;
obtaining information for at least a first reference center of a reference descriptor corresponding to the to-be-encoded descriptor, wherein the reference descriptor corresponds to at least one encoded 3D map point on the 3D map, and the information for the at least one first reference center represents a center obtained after clustering processing is performed on at least one subfeature of the reference descriptor;
obtaining information for at least one second center of the to-be-encoded descriptor based on the information for the at least one first center and the information for the at least one first reference center;
performing compaction processing on the information for the at least one second center of the to-be-encoded descriptor to obtain a compact representation of the to-be-encoded descriptor; and
encapsulating the compact representation to obtain a bitstream of the 3D map.

48. The method according to claim 47, wherein the obtaining information for at least one second center of the to-be-encoded descriptor based on the information for the at least one first center and the information for the at least one first reference center comprises:
obtaining the information for the at least one second center of the to-be-encoded descriptor by looking up a first table based on the information for the at least one first center and the information for the at least one first reference center.

49. The method according to claim 48, wherein the first table comprises information for at least one third center corresponding to information for at least one coding center and information for at least one second reference center, wherein
the information for at least the coding center comprises the information for the at least one first center, and the information for the at least one second reference center comprises the information for the at least one first reference center; and
the obtaining the information for the at least one second center of the to-be-encoded descriptor by looking up a first table based on the information for the at least one first center and the information for the at least one first reference center comprises:
obtaining, from the first table based on the information for the at least one first center and the information for the at least one first reference center, the information for the at least one third center corresponding to the information for the at least one first center and the information for the at least one first reference center; and
using the information for the at least one third center as the information for the at least one second center of the to-be-encoded descriptor.

50. The method according to claim 49, wherein the first table is a multidimensional array, and each element in the multidimensional array corresponds to the information for at least the coding center or the information for the at least one second reference center.

51. The method according to claim 47, wherein the obtaining information for at least one second center of the to-be-encoded descriptor based on the information for the at least one first center and the information for the at least one first reference center comprises:
obtaining the information for the at least one second center of the to-be-encoded descriptor by looking up a second table based on the information for the at least one first center, wherein the second table is established based on the information for the at least one first reference center.

52. The method according to claim 51, wherein the second table comprises the information for the at least one first reference center and information for at least one fourth center corresponding to the information for the at least one first center; and
the obtaining the information for the at least one second center of the to-be-encoded descriptor by looking up a second table based on the information for the at least one first center comprises:
obtaining, from the second table based on the information for the at least one first center, the information for the at least one fourth center corresponding to the information for the at least one first center; and
using the information for the at least one fourth center corresponding to the information for the at least one first center as the information for the at least one second center of the to-be-encoded descriptor.

53. The method according to claim 52, wherein the second table is an array with at least one dimension, and each element in the array with at least one dimension corresponds to the information for the at least one first center.

54. The method according to claim 47, wherein the obtaining information for at least one second center of the to-be-encoded descriptor based on the information for the at least one first center and the information for the at least one first reference center comprises:
using an exclusive OR value or a difference of the information for the at least one first center and the information for the at least one first reference center as the information for the at least one second center of the to-be-encoded descriptor.

55. A 3D map decompression method, wherein the method comprises:
decapsulating a bitstream of a 3D map to obtain information for at least one second center of a to-be-decoded descriptor, wherein the to-be-decoded descriptor corresponds to at least one 3D map point on the 3D map;
obtaining information for at least one first reference center of a reference descriptor corresponding to the to-be-decoded descriptor, wherein the reference descriptor corresponds to at least one decoded 3D map point on the 3D map, and the information for the at least one first reference center represents a center obtained after clustering processing is performed on at least one subfeature of the reference descriptor;
obtaining information for at least one first center of the to-be-decoded descriptor based on the information for the at least one second center and the information for the at least one first reference center; and
obtaining reconstructed data of the at least one 3D map point based on the information for the at least one first center of the to-be-decoded descriptor.

56. A 3D map compression apparatus, comprising:
one or more processors; and
a memory, configured to store one or more programs, wherein
when the one or more programs are executed by the one or more processors, the one or more processors are enabled to implement the method according to any one of claims 1 to 15 or the method according to any one of claims 47 to 54.

57. A 3D map decompression apparatus, comprising:
one or more processors; and
a memory, configured to store one or more programs, wherein
when the one or more programs are executed by the one or more processors, the one or more processors are enabled to implement the method according to any one of claims 16 to 23 or the method according to claim 55.

58. A computer-readable storage medium, comprising a computer program, wherein when the computer program is executed on a computer, the computer is enabled to perform the method according to any one of claims 1 to 23 or the method according to any one of claims 47 to 55.
